# FASCICULE DE BREVET EUROPEEN

(11) **EP 1 515 911 B1**
(45) Date de publication et mention de la délivrance du brevet: **27.04.2011**
(21) Numéro de dépôt: 03760783.5
(22) Date de dépôt: 24.06.2003
(51) Int. Cl.: C01B 31/02

(54) **PROCEDE ET DISPOSITIF DE DEPOT PAR PYROLYSE DE NANOTUBES DE CARBONE OU DE NANOTUBES DE CARBONE DOPES A L AZOTE**
VERFAHREN UND VORRICHTUNG ZUR ABSCHEIDUNG VON NANORÖHREN ODER STICKSTOFFDOTIERTEN KOHLENSTOFFNANORÖHREN MITTELS PYROLYSE
METHOD AND DEVICE FOR DEPOSITING CARBON NANOTUBES OR NITROGEN-DOPED CARBON NANOTUBES BY MEANS OF PYROLYSIS

(30) Priorité: 24.06.2002 FR 0207785
(43) Date de publication de la demande: 23.03.2005
(73) Titulaire: Commissariat à l'Énergie Atomique et aux Énergies Alternatives, 75015 Paris (FR)
(72) Inventeur: MAYNE, Martine, F-91470 LES MOLIERES (FR); PORTERAT, Dominique, F-91400 ORSAY (FR); SCHUSTER, Frédéric, F-78100 SAINT GERMAIN EN LAYE (FR)
(74) Mandataire: Poulin, Gérard
(86) Numéro de dépôt international: PCT/FR2003/001944
(87) Numéro de publication internationale: WO 2004/000727

(56) Documents cités:
- FR-A- 2 707 671
- MAYNE M ET AL: "Pyrolytic production of aligned carbon nanotubes from homogeneously dispersed benzene-based aerosols" CHEMICAL PHYSICS LETTERS, NORTH-HOLLAND, AMSTERDAM, NL, vol. 338, 20 avril 2001 (2001-04-20), pages 101-107, XP002229515 ISSN: 0009-2614 cité dans la demande
- ZHU H W ET AL: "Direct synthesis of long single-walled carbon nanotube strands" SCIENCE, 3 MAY 2002, AMERICAN ASSOC. ADV. SCI, USA, vol. 296, no. 5569, pages 884-886, XP002273566 ISSN: 0036-8075
- AGO H ET AL: "Gas-phase synthesis of single-wall carbon nanotubes from colloidal solution of metal nanoparticles" JOURNAL OF PHYSICAL CHEMISTRY. B, MATERIALS, SURFACES, INTERFACES AND BIOPHYSICAL, WASHINGTON, DC, US, vol. 105, no. 43, 1 novembre 2001 (2001-11-01), pages 10453-10456, XP002229514 ISSN: 1089-5647 cité dans la demande
- SINGH CHARANJEET ET AL: "Production of aligned carbon nanotubes by the CVD injection method" PROCEEDINGS OF THE TSUKUBA SYMPOSIUM ON CARBON NANOTUBE IN COM (CNT10);TSUKUBA, JAPAN OCT 3-5 2001, vol. 323, no. 1-4, 3 octobre 2001 (2001-10-03), pages 339-340, XP002232173 Phys B Condens Matter;Physica B: Condensed Matter October 2002
- CHE R ET AL: "FE2O3 PARTICLES ENCAPSULATED INSIDE ALIGNED CNX NANOTUBES" APPLIED PHYSICS LETTERS, AMERICAN INSTITUTE OF PHYSICS. NEW YORK, US, vol. 82, no. 19, 12 mai 2003 (2003-05-12), pages 3319-3321, XP001170832 ISSN: 0003-6951
- KUDASHOV A G ET AL: "Gas-phase synthesis of nitrogen-containing carbon nanotubes and their electronic properties" 5TH INTERNATIONAL WORKSHOP FULLERENES AND ATOMIC CLUSTERS', ST. PETERSBURG, RUSSIA, 2-6 JULY 2001, vol. 44, no. 4, pages 626-629, XP008028597 Fizika Tverdogo Tela, April 2002, MAIK Nauka, Russia ISSN: 0367-3294
- CAO A ET AL: "An effective way to lower catalyst content in well-aligned carbon nanotube films" CARBON, vol. 39, no. 1, janvier 2001 (2001-01), pages 152-155, XP004319836 ISSN: 0008-6223
- NARDUCCI D ET AL: "MODELING OF AERSOL-ASSISTED CHEMICAL VAPOR CO-DEPOSITION OF NIO AND CARBON NANOTUBES" JOURNAL DE PHYSIQUE IV, EDITIONS DE PHYSIQUE. LES ULIS CEDEX, FR, vol. 9, no. 8, septembre 1999 (1999-09), pages 741-747, XP008012969 ISSN: 1155-4339
- ANDREWS R ET AL: "Continuous production of aligned carbon nanotubes: a step closer to commercial realization" CHEMICAL PHYSICS LETTERS, 16 APRIL 1999, ELSEVIER, NETHERLANDS, vol. 303, no. 5-6, pages 467-474, XP002232174 ISSN: 0009-2614 cité dans la demande
- DATABASE WPI Section Ch, Week 200273 Derwent Publications Ltd., London, GB; Class E36, AN 2002-679265 XP002232175 & KR 2002 025 101 A (NANOTECH CO LTD), 3 avril 2002 (2002-04-03)

## Description

La présente invention concerne un procédé ainsi qu'un dispositif de dépôt par pyrolyse, plus précisément par pyrolyse d'un liquide contenant au moins un hydrocarbure liquide ou au moins un composé liquide constitué d'atomes de carbone, d'azote, et éventuellement d'atomes d'hydrogène et/ou d'autres éléments chimiques tels que l'oxygène, et éventuellement un précurseur de métal.

Le domine technique de l'invention peut être défini, de manière générale, comme celui du dépôt, de la préparation, de nanotubes de carbone ou de nanotubes de carbone et d'azote (appelés aussi nanotubes de carbone dopés à l'azote ou « dopés azote »), préférentiellement multi-feuillets et le plus souvent alignés les uns par rapport aux autres.

Dans ce qui suit, on fait généralement référence aux nanotubes de carbone, mais il est bien évident que la description qui suit peut s'appliquer aussi aux nanotubes de carbone dopés azote, les adaptations nécessaires pouvant, le cas échéant, être facilement déduites par l'homme du métier.

Les nanotubes de carbone et d'azote sont généralement désignés par les termes nanotubes « CN » ou nanotubes de carbone dopés à l'azote ou nanotubes « dopés azote ».

Rappelons, tout d'abord, que l'on définit un nanotube de carbone comme l'enroulement concentrique d'une ou de plusieurs couches de graphène (pavages d'hexagones de carbone). On parlera de SWNT (ou Single Wall Nanotube, en anglais), lorsqu'il s'agit d'une seule couche, et de MWNT (Multi Wall Nanotube) dans le cas de plusieurs couches.

Les nanotubes de carbone suscitent un intérêt croissant pour diverses applications en nanotechnologie. En effet, en raison de leur structure unique et de leurs dimensions, caractérisées par un fort rapport longueur/diamètre, ils présentent des propriétés mécaniques et électroniques exceptionnelles. En particulier, des études récentes montrent que ces nanostructures développent une très forte résistance à la traction et que leur comportement électrique varie de semi-conducteur à métallique en fonction de leur structure.

C'est pourquoi, ils peuvent notamment participer à la réalisation de matériaux composites pour leur conférer de nouvelles propriétés mécaniques et électriques.

Des études ont montré que l'on peut élaborer des matériaux composites à base de nanotubes et à matrice polymère, pour les rendre conducteurs ou magnétiques, par exemple, ou à base de nanotubes et à matrice céramique ou métallique pour le renforcement mécanique, par exemple.

Ces applications nécessitent des quantités significatives de nanotubes. Cependant, il reste encore difficile d'accéder à de grandes quantités de nanotubes propres. La raison essentielle réside dans les moyens de production, le plus souvent développés à l'échelle du laboratoire qui permettent, certes, l'obtention de nanotubes, mais avec des cinétiques de croissance et un rendement faible, et qui engendrent la formation concomitante de sous-produits, tels que du carbone amorphe, et des particules métalliques, ou autres.

De plus, la production de nanotubes alignés, c'est-à-dire non enchevêtrés et de longueur contrôlée s'avère intéressante pour des études de caractérisation détaillées des propriétés des nanotubes, mais aussi pour des applications potentielles telles que les cathodes froides pour écrans plats, le stockage de l'hydrogène, les panneaux solaires et les composites. Dans ce contexte, un enjeu fort est de développer des méthodes de synthèse facilement transposables à l'échelle continue ou semi-continue et permettant de contrôler la production de nanotubes de carbone en terme de propreté, de rendement, d'alignement et de dimensions.

Différents procédés sont utilisés pour produire des nanotubes de carbone mono (SWNT) ou multi-parois (MWNT) : il s'agit, d'une part, des procédés physiques basés sur la sublimation du carbone, et, d'autre part, des procédés chimiques basés sur la décomposition catalytique de molécules contenant du carbone.

Les procédés physiques consistent à sublimer du carbone graphitique en présence ou non de métal. Il s'agit essentiellement des méthodes d'arc électrique, d'ablation laser, ou utilisant un four solaire.

Néanmoins, le rendement de production de ces deux procédés est faible, ils sont, en outre, assez coûteux et la production est difficilement contrôlable en terme de longueur et diamètre des nanotubes. De plus, les nanotubes obtenus contiennent le plus souvent une quantité non négligeable de sous-produits, tels que des particules métalliques encapsulées, des fullerènes et beaucoup de carbone amorphe et ils sont enchevêtrés les uns aux autres.

Les procédés chimiques consistent le plus souvent à pyrolyser des sources carbonées sur des catalyseurs métalliques et s'apparentent fortement au procédé de dépôt chimique en phase vapeur (CVD). Ils constituent une voie simple de mise en oeuvre, plus facilement contrôlable et moins coûteuse que les procédés physiques. Cependant, un grand nombre de ces procédés chimiques engendrent encore la formation de sous-produits en quantité variable. Pour palier à cet inconvénient et tirer uniquement partie des propriétés des nanotubes, il est alors nécessaire de procéder à une purification ultérieure du produit obtenu. Les différents traitements de purification entraînent des imperfections au niveau de la surface des nanotubes, modifiant alors certaines de leurs propriétés, ainsi qu'un coût supplémentaire à la production.

Les premiers procédés pyrolytiques utilisées consistaient à pyrolyser des sources carbonées sur des catalyseurs métalliques placés dans une nacelle et préalablement déposés dans un four. Les sources carbonées étaient le plus souvent des hydrocarbures gazeux, tels que de l'acétylène, ou de l'éthylène ou des hydrocarbures liquides très volatils, tels que du benzène véhiculé sous forme de vapeur, et les catalyseurs étaient soit des poudres métalliques, à savoir : le plus souvent du fer, du nickel ou du cobalt, soit des précurseurs organométalliques, à savoir : le plus fréquemment du ferrocène.

Les produits obtenus étaient des nanotubes de carbone multi-parois ou dans certaines conditions mono- parois enchevêtrés, recouverts d'une couche de carbone amorphe et mêlés à différentes formes de sous produits, comme des particules métalliques encapsulées et des filaments de carbone amorphe en quantité significative.

Dans le cas particulier de la pyrolyse d'hydrocarbures gazeux, tels que l'acétylène, le butane, ou le méthane en présence de ferrocène ou de phtalocyanine de fer, les premiers nanotubes alignés ont pu être obtenus [1, 2, 3, 4]. Cependant la technique de synthèse passe par la vaporisation du ferrocène ou de phtalocyanine de fer solide stocké dans une nacelle située dans un four, ce qui ne permet pas d'obtenir des débits de vapeurs reproductibles et stables. De plus, même sous la forme vapeur, il est difficile de véhiculer ces produits de manière continue avec un débit constant, ce qui n'est pas facilement adaptable pour une production continue ou semi-continue.

Depuis, ce procédé pyrolytique a été modifié en vue de produire des nanotubes propres et alignés. Pour cela, deux voies différentes ont été exploitées : la première utilise des substrats contenant le catalyseur, et la seconde fait appel à des solutions liquides contenant la source carbonée et un précurseur catalytique.

La première voie consiste à préparer des substrats par imprégnation avec un sel du métal choisi ou par organisation d'un réseau d'éléments catalytiques, à le placer dans un réacteur, et à pyrolyser sur ce dernier soit un précurseur carboné solide préalablement vaporisé [⁵N. Grobert et al.], soit un hydrocarbure gazeux, le plus souvent l'acétylène [par exemple : ⁶H.Ago et al., ⁷X.Y. Zhang et al., ⁸Lee et al.], ou soit une solution de xylène et ferrocène [⁹A. Cao et al., ¹⁰B.Q. Wei et al.], ou encore une solution aqueuse de phénol ou d'urée préalablement nébulisée à l'aide d'un nébuliseur à ultrasons [11].

Les nanotubes obtenus par la plupart de ces auteurs sont « propres » et présentent un degré d'alignement élevé, mais leur longueur qui est inférieure à 60 microns et leur vitesse de croissance restent faibles. De plus, la préparation de substrats est une étape longue et assez contraignante dans l'optique d'une production à grande échelle.

La seconde voie consiste à pyrolyser, en l'absence de substrat, des solutions contenant un hydrocarbure liquide et un ou plusieurs précurseurs organométalliques. L'avantage de cette seconde voie est que l'on peut alimenter simultanément le réacteur avec les sources carbonée et catalytique. Dans le cas le plus fréquent de l'utilisation de solutions, les hydrocarbures liquides sont des composés aromatiques, tels que le benzène ou le xylène et les précurseurs organométalliques sont des métallocènes, tels que le ferrocène ou le nickelocène. L'introduction de la solution peut se faire sous forme :
- liquide au travers d'un capillaire d'une seringue d'injection [¹²R Andrews et al.] ;
- de nébulisat (« spray ») à l'aide d'un appareil de laboratoire en Pyrex^{®} constitué d'un capillaire acheminant la solution, capillaire qui est contenu dans une tuyère véhiculant un flux d'Argon utilisé pour générer le « spray » [¹³R. Kamalakaran et al.] ;
- aérosol à l'aide d'un atomiseur dont le principe de fonctionnement est identique à celui d'un pistolet de projection de peinture [¹⁴M. Mayne et al., ¹⁵N_{.} Grobert et al.].

Tous les auteurs cités précédemment [12 - 15] rapportent la formation sur les parois du réacteur de nanotubes multi-feuillets "propres" et alignés en utilisant des solutions hydrocarbure/métallocène(s).

Par ailleurs, des suspensions colloïdales de nanoparticules métalliques introduites dans un four à l'aide d'une seringue ont permis la synthèse de nanotubes de carbone mono-feuillets non alignés [16].

L'utilisation de solutions [12 - 15] est très intéressante, facile de mise en oeuvre et facilement transposable pour une production à plus grande échelle. Pour pouvoir envisager une telle transposition, il est nécessaire de pouvoir injecter les solutions avec une grande souplesse, c'est à dire pouvoir faire varier le débit de liquide dans une large gamme, contrôler le débit de gaz vecteur indépendamment du débit de liquide, pouvoir opérer à pression contrôlée dans l'enceinte de réaction, et aussi pouvoir utiliser des liquides ayant des caractéristiques physiques différentes.

Le système d'injection à l'aide d'une seringue [9, 12] permet à priori d'injecter une large gamme de liquides et aussi de solutions issues de ces liquides. Cependant il s'agit d'un système d'injection en continu qui n'engendre pas la formation d'un liquide finement divisé, ce qui limite la capacité d'évaporation. Ainsi, le liquide étant introduit dans une première zone chauffée sous sa forme liquide, il est impossible d'injecter des quantités suffisamment importantes car elles ne seraient alors pas totalement transformées sous forme vapeur et peuvent à terme entraîner un encrassement de la zone chauffée. Il en résulte ainsi des vitesses de croissance de nanotubes qui restent encore faibles, par exemple de l'ordre de 25 à 30 µm/h, et qui nécessitent alors une durée de production de 2 heures pour produire des nanotubes de 50 µm de long. De plus, le réservoir de liquide est en communication directe avec le réacteur par l'intermédiaire du capillaire de la seringue, ce qui conduit à un échauffement partiel de la solution entraînant alors une évaporation préférentielle du liquide hydrocarboné par rapport au métallocène, et dans certains cas une décomposition thermique prématurée des réactifs. De plus, cette liaison entre le capillaire de la seringue et le réacteur constitue un handicap lorsque l'on veut pouvoir opérer à pression contrôlée dans l'enceinte de réaction.

En ce qui concerne l'injection sous forme aérosol ou « spray » [11, 13, 14, 15], le liquide est acheminé dans le réacteur sous forme de gouttelettes.

Ces gouttelettes nécessitent une énergie moins importante pour être mises sous forme vapeur par rapport au liquide injecté par la seringue. Ainsi, il est possible de faire varier la densité de l'aérosol et donc le débit d'injection dans une plus large gamme. Néanmoins, l'utilisation de systèmes de génération de « spray » [13-15] basés sur le principe de l'atomisation d'un liquide par un flux de gaz important, à l'instar des pistolets à peinture, ne permet pas de générer de forts débits de liquides ni de contrôler indépendamment le débit de gaz porteur et le débit de liquide injecté ou la densité d'aérosol produite.

De plus, ces systèmes disponibles sur le marché ne permettent pas d'utiliser tous types de solutions, en particulier les solutions réalisées avec des liquides volatils. En revanche, les systèmes de génération d'aérosols par ultrasons permettent d'accéder à des débits de liquides plus importants et présentent l'avantage du contrôle indépendant du débit de gaz porteur et du débit de liquide. Cependant, ces systèmes de génération d'aérosols fonctionnent correctement pour des liquides faiblement visqueux, c'est-à-dire dont la viscosité est typiquement inférieure à la viscosité de l'eau, et dans le cas de solutions obtenues à partir de liquides faiblement visqueux ou volatils, le liquide est préférentiellement nébulisé, et le solide reste dans le réservoir de solution au lieu d'être acheminé dans le réacteur avec la même concentration que dans la solution. De plus, pour ces deux types de dispositifs de génération d'aérosols, l'enceinte contenant le liquide n'est pas isolée du réacteur, ce qui rend difficile une production à pression contrôlée. A quelques adaptations près, l'étude qui précède peut s'appliquer aussi aux nanotubes de carbone et d'azote.

Il ressort de ce qui précède, qu'il existe un besoin pour un procédé de dépôt, de préparation, de synthèse de nanotubes de carbone ou de nanotubes de carbone et d'azote qui soit facilement transposable à l'échelle continue ou semi-continue et qui permette de contrôler la production des nanotubes de carbone ou des nanotubes de carbone et d'azote en termes de propreté c'est-à-dire d'absence de sous-produits, de rendement, d'alignement, et de dimensions.

Il existe, en particulier, un besoin pour un procédé de dépôt, de préparation, de synthèse par pyrolyse, c'est-à-dire selon le phénomène de décomposition catalytique d'hydrocarbures liquides (ou d'un composé liquide constitué d'atomes de carbone, d'azote, et éventuellement d'atomes d'hydrogène et/ou d'autres éléments chimiques, ce composé liquide étant dit « composé azoté »), de nanotubes de carbone (ou de nanotubes de carbone dopés à l'azote) qui assure la production rapide et sélective de nanotubes de carbone (ou de nanotubes de carbone dopés azote) « propres », c'est-à-dire exempts de sous-produits, et la maîtrise de la disposition, de l'arrangement dans l'espace et des dimensions de ces nanotubes de carbone ou de ces nanotubes de carbone dopés azote.

Il existe encore un besoin pour un procédé de préparation de nanotubes de carbone ou de nanotubes de carbone dopés à l'azote mettant en oeuvre la décomposition catalytique d'un hydrocarbure liquide ou d'un composé liquide constitué d'atomes de carbone, d'azote, et éventuellement d'atomes d'hydrogène et/ou d'autres éléments chimiques (dit « composé azoté »), par pyrolyse d'un liquide contenant l'hydrocarbure ou le composé azoté et éventuellement le précurseur catalytique, qui ne présente pas les inconvénients, limitations, défauts et désavantages des procédés de pyrolyse de l'art antérieur et qui résolve les problèmes rencontrés dans les procédés de l'art antérieur.

Outre les problèmes déjà mentionnés ci-dessus, ces problèmes sont notamment les suivants :
- l'injection non homogène de la solution dans le réacteur avec une évaporation préférentielle du liquide hydrocarboné ou du composé liquide azoté et une décomposition prématurée, ou des réactions parasites au sein de la solution ;
- la difficulté d'utiliser des hydrocarbures liquides ou des composés liquides azotés très volatils ou relativement visqueux ;
- la difficulté d'injecter des solutions ayant des caractéristiques physiques variables et donc présentant des concentrations en précurseurs solides variant dans une large gamme ;
- l'impossibilité d'injecter avec un fort débit, tout en conservant l'homogénéité de concentration de la solution initiale.

Le but de la présente invention est de fournir un procédé et un dispositif de préparation de nanotubes de carbone ou de nanotubes de carbone dopés à l'azote qui réponde, entre autres, aux besoins indiqués ci-dessus.

Ce but, et d'autres encore, sont atteints, conformément à l'invention, par un procédé de préparation de nanotubes de carbone ou de nanotubes de carbone dopés à l'azote, par pyrolyse dans une enceinte de réaction d'un liquide contenant au moins un hydrocarbure liquide précurseur de carbone ou au moins un composé liquide précurseur de carbone et d'azote constitué d'atomes de carbone, d'azote et éventuellement d'atomes d'hydrogène et/ou d'autres éléments chimiques tels que l'oxygène, et, éventuellement, au moins un composé de métal précurseur d'un métal catalyseur, dans lequel ledit liquide sous pression est mis sous la forme de particules liquides finement divisées, telles que des gouttelettes, par un système d'injection périodique, et les particules finement divisées, telles que des gouttelettes, ainsi formées, sont véhiculées par un courant de gaz vecteur et introduites dans l'enceinte de réaction, où sont réalisés le dépôt et la croissance des nanotubes de carbone ou des nanotubes de carbone dopés à l'azote.

Le procédé selon l'invention est défini fondamentalement par la mise en oeuvre d'un système ou dispositif d'injection spécifique qui est un système d'injection périodique (discontinu).

Par périodique, on entend généralement que le système réalise l'injection de manière discontinue, est à ouverture périodique, et fonctionne, de préférence, à fréquence fixe. Le temps d'ouverture et la fréquence de répétition de cette ouverture sont des paramètres ajustables.

Ce système d'injection permet d'injecter toutes sortes de liquides, aussi bien sous la forme de solutions que de suspensions et permet, de préférence, de couvrir une large gamme de débits d'injections.

Avantageusement, le système d'injection est du type injecteur de moteur thermique automobile discontinu (périodique) ; de préférence en outre, il est muni d'un clapet du type vanne à aiguille.

Un tel système d'injection n'a jamais été mis en oeuvre dans le cadre de la préparation, du dépôt, de la synthèse de nanotubes de carbone ou de nanotubes de carbone dopés azote.

Ce système d'injection spécifique est utilisé, alimenté selon l'invention, avec un liquide spécifique qui contient au moins un hydrocarbure liquide précurseur du carbone formant les nanotubes que l'on vise à synthétiser ou au moins un composé liquide constitué d'atomes de carbone, d'azote, et éventuellement d'atomes d'hydrogène et/ou d'autres éléments chimiques, tels que l'oxygène (dit « composé azoté ») et, éventuellement, au moins un composé organométallique ou métallique précurseur d'un métal qui joue le rôle de catalyseur pour la préparation, le dépôt, la synthèse des nanotubes de carbone ou des nanotubes de carbone dopés azote.

L'utilisation d'un tel injecteur spécifique avec un tel liquide spécifique n'est ni décrite, ni suggérée dans l'art antérieur.

Rien ne pouvait laisser supposer qu'un tel système d'injection, qui est, notamment, spécialement conçu pour des liquides, tels que les carburants pour moteurs thermiques, pourrait convenir à l'atomisation, la nébulisation, d'un liquide aussi spécifique que le liquide défini plus haut, permettant le dépôt de nanotubes de carbone ou de nanotubes de carbone dopés azote.

Dans le document FR-A-2 707 671, on mentionne, certes, l'utilisation d'un système d'injection de type automobile, pour introduire une solution, contenant essentiellement des précurseurs solides dissous dans un liquide et qui présentent des températures de sublimation très élevées, dans une enceinte de dépôt chimique en phase vapeur, mais les couches préparées sont des couches minces d'oxydes et la synthèse de nanotubes de carbone ou de nanotubes de carbone dopés azote n'est jamais mentionnée.

En outre, le liquide que l'on met sous forme de gouttelettes dans le procédé de ce document est constitué par des solvants très volatils, dans lesquels sont dissous les précurseurs solides.

Le solvant sert uniquement à véhiculer le précurseur solide vers la chambre de CVD et il est éliminé avant que la réaction de dépôt - de l'oxyde - ne se produise sur le substrat. Le solvant ne participe, en aucune manière, à la synthèse des couches préparées, par exemple des couches d'oxyde préparées, et il ne fournit aucun des éléments constituant ces couches, il sert uniquement de véhicule, vecteur, passif.

Dans le procédé de l'invention, l'hydrocarbure liquide ou le composé azoté liquide est le précurseur du carbone ou du carbone et de l'azote formant les nanotubes, il s'agit donc d'un véritable réactif (et non d'un simple solvant ou véhicule passif) jouant un rôle fondamental, qui intervient de manière prépondérante dans la formation des nanotubes et qui fournit la matière première essentielle pour la synthèse, le dépôt et la croissance des nanotubes de carbone ou des nanotubes de carbone dopés azote.

L'hydrocarbure liquide ou le composé azoté, selon le procédé de l'invention, n'est pas éliminé avant l'enceinte de réaction, de dépôt, comme le solvant du FR-A-2 707 671, il pénètre dans celle-ci et c'est sa pyrolyse en présence du catalyseur métallique qui forme les nanotubes de carbone ou les nanotubes de carbone dopés azote recherchés.

Les caractéristiques du procédé de l'invention, associant un système d'injection spécifique et un liquide particulier mis sous la forme de particules liquides finement divisées, telles que des gouttelettes par ledit système, permettent, entre autres, d'apporter une solution aux problèmes des procédés de l'art antérieur et de répondre aux besoins indiqués plus haut.

Par particules liquides « finement divisées », on entend des particules d'une taille de quelques dixièmes de microns à quelques dizaines de microns. Ces particules ont, de préférence, la forme de gouttelettes, mais d'autres formes peuvent être envisagées.

Ces particules, en particulier ces gouttelettes forment généralement un brouillard ou un jet de gouttelettes.

Le procédé selon l'invention est simple, fiable, reproductible et permet la préparation de nanotubes de carbone ou de nanotubes de carbone dopés azote, notamment de nanotubes de carbone ou nanotubes de carbone dopés azote multi-feuillets, "propres", c'est-à-dire essentiellement exempts de sous produits, alignés, et de longueur contrôlable.

Le procédé selon l'invention peut être mis en oeuvre facilement, à grande échelle, pour produire de grandes quantités de nanotubes.

Les nanotubes sont obtenus avec un fort rendement, par exemple de 200 à 1700 %, et la vitesse de croissance des nanotubes est très élevée, ce qui réduit d'autant la durée du procédé qui est très réduite par rapport aux procédés de l'art antérieur.

On entend par rendement en produit carboné ou en produit carboné et azoté (dopé à l'azote), ou en nanotubes si le produit carboné ou le produit carboné et azoté (dopé à l'azote) est constitué très majoritairement de nanotubes, la masse de produit obtenu comparée à la masse de catalyseur utilisée lors de la réaction.

Les nanotubes obtenus selon l'invention sont régulièrement disposés, arrangés, dans l'espace, et, généralement, sont alignés les uns par rapport aux autres et sensiblement perpendiculaires à la paroi de l'enceinte de réaction. Lorsqu'ils sont préparés directement dans l'enceinte de réaction, telle qu'un réacteur, ils recouvrent généralement uniformément les parois du réacteur.

Lorsqu'ils sont déposés sur un substrat, leur axe principal est généralement perpendiculaire au plan du substrat.

Les nanotubes obtenus, qui sont d'excellente qualité, du point de vue propreté et alignement, peuvent, en outre, avoir des longueurs très importantes, par exemple de un à quelques micromètres (par exemple, 1 à 10 µm) jusqu'à un à quelques millimètres (par exemple, 1 à 10 mm).

Une telle longueur est, en outre, obtenue rapidement dans un temps plus court que celui nécessaire avec les autres procédés.

Comme on l'a indiqué, le procédé selon l'invention résout, entre autres, les problèmes énumérés plus haut.

En particulier, le système d'injection spécifique, de préférence du type injecteur de moteur thermique automobile discontinu, de préférence encore muni d'un clapet de type vanne à aiguille, mis en oeuvre dans le procédé de l'invention, permet l'injection d'une grande variété de solutions, de compositions, de concentrations différentes, réalisées, par exemple, à partir de différents types d'hydrocarbures liquides ou de différents types de composés azotés liquides et une croissance rapide des nanotubes.

La technique d'introduction de liquides, tels que des solutions dans une enceinte de réaction sous la forme de particules liquides finement divisées, par exemple de gouttelettes, à l'aide du système d'injection spécifique, selon l'invention, est contrôlable, fiable, reproductible et beaucoup plus souple que les techniques énumérées plus haut, qui mettent en oeuvre une seringue, un « sprayer » ou un nébuliseur à ultrasons. La souplesse de cette technique permet, notamment, l'utilisation de solutions constituées de liquides carbonés volatils et moins toxiques que le benzène, bien que l'utilisation de ces derniers reste toujours possible.

En d'autres termes, les avantages essentiels liés au système d'injection, mis en oeuvre dans le procédé de l'invention, par rapport aux systèmes précédents, utilisés pour l'injection, la mise sous forme de gouttelettes de liquides, spécifiquement formulés pour la préparation de nanotubes de carbone, sont notamment les suivants
isolation entre la partie « amont » du procédé, par exemple l'enceinte de stockage du liquide, tel qu'une solution et l'évaporateur éventuel et l'enceinte de réaction chauffée ;
   - possibilité d'opérer à pression contrôlée dans l'enceinte du réacteur, pression qui peut être inférieure à la pression atmosphérique ;
   - possibilité d'utiliser des liquides très volatils ou des liquides moins volatils et/ou plus visqueux ;
   - possibilité d'utiliser différents types de solutions à concentrations variables, et même, de manière surprenante, possibilité d'utiliser des suspensions colloïdales de particules métalliques dont la taille des particules est généralement inférieure à 30 microns (voir plus loin) ;
   - génération de gouttelettes de volume bien défini ;
   - contrôle du débit de liquide dans une large gamme et indépendamment du débit de gaz vecteur ;
   - débit de liquide reproductible.

Tous types d'hydrocarbures liquides ou de composés azotés liquides peuvent être utilisés dans le procédé de l'invention : en effet, grâce au système d'injection spécifique mis en oeuvre selon l'invention, de manière surprenante, tout liquide à base de tous types d'hydrocarbures liquides ou de composés azotés liquides peut être utilisé, même des liquides qui n'avaient alors jamais été utilisés dans ce but, ni même envisagés pour celui-ci.

Avantageusement, l'hydrocarbure liquide (ou les hydrocarbures liquides, s'il y en a plusieurs) est choisi parmi les hydrocarbures liquides (à la température ordinaire) non aromatiques.

Parmi les hydrocarbures liquides non aromatiques à la température ambiante, on peut citer, par exemple : les alcanes de 5 à 20C, tels que le n-pentane, l'isopentane, l'hexane, l'heptane et l'octane ; les alcènes liquides de 5 à 20C ; les alcynes liquides de 4 à 20C ; et les cycloalcanes de 5 à 15C, tels que le cyclohexane.

Ces hydrocarbures liquides non aromatiques et notamment l'hexane, l'heptane, et le cyclohexane sont plus volatils que les hydrocarbures liquides aromatiques, éventuellement substitués, tels que le benzène, le toluène et le xylène et peuvent donc être utilisés, pour la première fois, dans le procédé de préparation de nanotubes de carbone selon l'invention, grâce au système d'injection particulier qui y est mis en oeuvre.

Au contraire, les autres systèmes de génération d'aérosols sont moins bien adaptés à l'utilisation de liquides volatils.

De plus, ces liquides n'ont jamais été utilisés auparavant pour la production de nanotubes, dans quelque procédé que ce soit.

Les alcanes et cycloalcanes liquides, tels que le cyclohexane, présentent l'avantage d'une toxicité moindre que le benzène qui est cancérigène et que le toluène et le xylène qui sont neurotoxiques.

Toutefois, les hydrocarbures aromatiques de 6 à 12C, éventuellement substitués, par exemple par au moins un groupe alkyle de 1 à 6 C, tels que le benzène, le toluène et le xylène peuvent aussi être utilisés.

Le composé azoté liquide est de préférence choisi parmi les amines liquides par exemple la benzylamine, ou parmi les nitriles tels que l'acétonitrile.

Il est, en outre, important de noter que le liquide peut contenir un seul hydrocarbure (ou composé azoté) ou un mélange de plusieurs hydrocarbures (ou composés azotés), en toutes proportions.

Le liquide, mis sous forme de particules liquides finement divisées, par exemple gouttelettes, se présente, de préférence, sous la forme d'une solution du(ou des) composé(s) de métal précurseur d'un métal, ledit métal jouant le rôle catalyseur, dans le ou les hydrocarbure(s) liquide(s).

Ledit composé de métal précurseur d'un métal catalyseur encore appelé "précurseur du métal jouant le rôle de catalyseur", lorsqu'il est présent dans la solution, est choisi généralement parmi les composés constitués de carbone, d'hydrogène, éventuellement d'azote et/ou d'oxygène et d'au moins un métal.

Ledit composé de métal précurseur d'un métal catalyseur pourra être ainsi choisi, par exemple, parmi les sels de métaux et les composés organométalliques.

Lesdits sels de métaux peuvent être choisis parmi les sels de métaux dont le contre-ion du métal est constitué par un hétéroatome, tel qu'un halogène.

Lesdits sels de métaux peuvent être choisis parmi les nitrates, les acétates, les acétylacétonates, et les phtalocyanines de métaux, tels que la phtalocyanine de fer et la phtalocyanine de nickel.

Le métal est généralement choisi parmi le fer, le cobalt, le nickel, le ruthénium, le palladium et le platine.

Des composés préférés sont le ferrocène, le nickelocène, le cobaltocène, le ruthénocène, la phtalocyanine de fer et la phtalocyanine de nickel.

Il est bien entendu que la solution peut être constituée soit d'un composé solide organométallique, soit d'un mélange de composés solides, dissous dans l'hydrocarbure liquide ou le composé azoté liquide ou dans un mélange d'hydrocarbures liquides ou dans un mélange de composés azotés liquides, la seule condition de réalisation est la solubilité du produit solide dans le liquide envisagé.

La concentration du ou des composé (s) de métal précurseur d'un métal catalyseur dans la solution est généralement de 0,2 à 15 % en masse.

Des résultats, particulièrement avantageux, sont obtenus avec des solutions à 2,5 % en masse de ferrocène, de préférence dans le toluène et/ou le cyclohexane.

Selon une autre forme de réalisation du procédé de l'invention et précisément, grâce au système d'injection spécifique mis en oeuvre dans celui-ci, le liquide peut également se présenter sous la forme d'une suspension colloïdale de particules ou, plus exactement, de nanoparticules métalliques dans ledit au moins un hydrocarbure liquide ou dans ledit au moins un composé azoté liquide.

De plus, le liquide peut également se présenter sous la forme d'une suspension colloïdale de particules dans laquelle est (sont) dissout(s), en outre, un ou plusieurs précurseurs de métal tels que ceux cités précédemment.

Le liquide de mise en suspension joue, ici encore, et à l'instar du cas où le liquide est une solution, le rôle de source carbonée ou de source carbonée et azotée. Il est bien entendu que le liquide peut être constitué d'un seul ou bien d'un mélange de deux ou plusieurs des hydrocarbures liquides cités précédemment. Ou bien, le liquide peut être constitué d'un seul ou bien d'un mélange de deux composés azotés liquides.

Avantageusement, les nanoparticules sont choisies parmi les nanoparticules de fer, nickel, cobalt, ruthénium, palladium, platine, etc., et de leurs mélanges ou de leurs alliages : à savoir, les alliages de deux ou plus de ces métaux, entre eux, ou avec d'autres métaux.

Dans le cas où le liquide se présente sous la forme d'une solution, il peut contenir, en outre, un ou plusieurs composé(s) favorisant la croissance des nanotubes de carbone ou des nanotubes de carbone et d'azote (dopés à l'azote), tels que le thiophène ou des précurseurs de terres rares (tels que Y, La, Ce, par exemple des nitrates ou des alcoxydes de celles-ci).

Avantageusement, les particules liquides finement divisées, telles que des gouttelettes, ont une dimension, par exemple, un diamètre de quelques dixièmes de micromètres à quelques dizaines de micromètres, de préférence de 0,1 à 20 micromètres.

Le système d'injection fonctionne généralement par impulsions, le nombre d'impulsions est généralement de 0,9 à 1200 par minute.

Et à chaque impulsion est injecté un volume de liquide dont la gamme varie à la fois en fonction de la durée d'ouverture de la vanne aiguille (généralement de 0.5 à 12 ms) et du liquide utilisé, et de la pression appliquée dans le réservoir, ce volume peut être, par exemple, de 2 à 100 microlitres.

Eventuellement, les particules liquides finement divisées, telles que les gouttelettes formées par le système d'injection sont, préalablement à leur introduction dans l'enceinte de réaction, évaporées dans un dispositif d'évaporation.

Avantageusement, la pyrolyse est réalisée à une température de 600 à 1 100°C, de préférence de 800 à 1 000°C, de préférence encore 800 à 900°C.

Avantageusement, la pyrolyse est réalisée pendant une durée de 5 à 60 min, de préférence de 15 à 30 minutes. Cette durée varie évidemment en fonction de la taille du réacteur.

Avantageusement, la pression dans l'enceinte de réaction est une pression contrôlée, par exemple inférieure à la pression atmosphérique.

Les nanotubes de carbone ou les nanotubes de carbone dopés azote peuvent être préparés directement sur les parois de l'enceinte de réaction qui servent ainsi de support pour leur dépôt et leur croissance. Dans ce cas, le liquide doit contenir un composé de métal, précurseur d'un métal jouant le rôle de catalyseur.

Ou bien, on peut prévoir au moins un substrat placé à l'intérieur de l'enceinte de réaction sur lequel est réalisé le dépôt et la croissance des nanotubes.

Dans une forme de réalisation, le liquide ne contient pas de composé de métal précurseur d'un métal catalyseur et le substrat est pourvu d'un dépôt de catalyseur.

Dans une autre forme de réalisation, le liquide contient un ou plusieurs composé(s) de métal précurseur d'un métal catalyseur et le substrat est pourvu ou n'est pas pourvu d'un dépôt de catalyseur.

En d'autres termes, si le précurseur du métal jouant le rôle de catalyseur ne se trouve pas dans la solution, c'est à dire que le liquide injecté est uniquement constitué d'hydrocarbure(s) ou de composé(s) azoté(s), alors le substrat devra contenir un dépôt de catalyseur(s) métallique(s), et si le précurseur du métal jouant le rôle de catalyseur se trouve dans la solution, c'est à dire que le liquide injecté est constitué d' hydrocarbure (s) ou de composé(s) azoté(s) et de précurseur(s) métallique(s), alors le substrat pourra contenir ou ne pas contenir un dépôt de catalyseur(s) métallique(s).

Selon le procédé de l'invention, et de nouveau, essentiellement grâce au système d'injection spécifique qu'il met en oeuvre, le dépôt et la croissance peuvent être réalisés sur tout type de substrat, à la condition que ce substrat résiste à la température de pyrolyse.

Le substrat peut être choisi, par exemple, parmi les substrats en quartz, en silicium, et les substrats en oxydes métalliques, tels que Al₂O₃, Y₂O₃, MgO et ZrO₂.

Le substrat peut aussi être un tissu de fibres de carbone ou de fibres de carbone dopées à l'azote.

Le substrat peut, préalablement au dépôt et à la croissance des nanotubes, être pourvu d'un dépôt de catalyseur, dans ce cas, le liquide injecté peut ne pas contenir de composé de métal précurseur d'un métal jouant le rôle de catalyseur.

Généralement, ce dépôt de catalyseur comprend un ou plusieurs métaux choisis généralement parmi les métaux de transition, tels que Fe, Ni, Co et d'autres métaux tels que Pd, Ru et Pt.

Le dépôt de catalyseur peut se présenter sous la forme d'une couche mince, mais il peut aussi être déposé de manière discontinue.

Lorsque le dépôt est discontinu, il peut être ordonné ou non et se présente sous la forme d'un ensemble d'entités discrètes, par exemple, de gouttes, plots, taches ou points de catalyseur.

Si le dépôt est ordonné, organisé, lesdites entités discrètes, sont disposées généralement dans la forme d'un réseau ou motif, et il est possible de générer ainsi des nanotubes de carbone ou des nanotubes de carbone dopés à l'azote disposés également en réseau, en motif, par exemple selon un motif dans lequel les nanotubes sont alignés, par exemple selon un motif régulier.

Les motifs de nanotubes que l'on peut obtenir sur des substrats et qui peuvent être testés en émission de champ sont un réseau de lignes ou rangées de nanotubes interconnectées.

Le substrat peut également être constitué par une couche de nanotubes de carbone ou de nanotubes de carbone dopés azote ou plusieurs couches de nanotubes superposées. On crée ainsi, avec le procédé selon l'invention, une structure multicouches de nanotubes.

L'invention concerne, en outre, un dispositif pour la mise en oeuvre du procédé, décrit plus haut, comprenant :
- une enceinte de réaction dans laquelle sont préparés des nanotubes de carbone ou des nanotubes de carbone dopés à l'azote par pyrolyse d'un liquide contenant au moins un hydrocarbure liquide précurseur de carbone ou au moins un composé liquide précurseur de carbone et d'azote constitué d'atomes de carbone, d'azote et éventuellement d'atomes d'hydrogène et/ou d'autres éléments chimiques tels que l'oxygène, et, éventuellement, au moins un composé de métal précurseur d'un métal catalyseur ;
- des moyens pour mettre ledit liquide sous pression sous la forme de particules liquides finement divisées, telles que des gouttelettes, pour véhiculer lesdites particules finement divisées, telles que des gouttelettes, par un courant de gaz vecteur et les introduire dans l'enceinte de réaction ;
dispositif dans lequel lesdits moyens pour mettre ledit liquide sous la forme de particules liquide finement divisées, pour véhiculer celles-ci, et les introduire dans l'enceinte de réaction comprennent un système d'injection périodique, muni d'une tête d'injection, et une bague de connexion, dans laquelle est prévue une arrivée du courant de gaz vecteur, reliant le système d'injection à l'enceinte de réaction, éventuellement par l'intermédiaire d'un dispositif d'évaporation.

Avantageusement, la paroi latérale de la bague de connexion comporte au moins un tube d'arrivée de gaz vecteur, ledit tube d'arrivée de gaz vecteur débouchant dans une gorge annulaire entourant la tête d'injection du système d'injection des particules liquides et placée en arrière de celle-ci, afin d'entourer sans les perturber les particules liquides finement divisées.

L'invention va maintenant être décrite de manière plus détaillée dans la description qui suit, donnée à titre illustratif et non limitatif, faite en référence aux dessins joints dans lesquels :
- la figure 1 est une vue latérale en coupe d'un dispositif pour la mise en oeuvre du procédé de l'invention ;
- la figure 2 est une vue latérale en coupe du système d'injection mis en oeuvre dans le procédé de l'invention, muni d'une bague de connexion ;
- les figure 3A et 3B sont des micrographies réalisées en microscopie électronique à balayage des produits carbonés, tels que collectés après la synthèse, et obtenus à partir d'une solution à 5 % de ferrocène dans le toluène pyrolysée à 850°C (figure 3A) et 900°C (figure 3B) pendant 15 min. ;
- les figures 4A, 4B, 4C et 4D sont des micrographies réalisées en microscopie électronique à balayage des produits carbonés, tels que collectés après la synthèse et obtenus à partir d'une solution à 2,5 % de ferrocène dans le toluène pyrolysée à 800°C pendant 15 min (figures 4A et 4B), et 850°C (figures 4C et 4D) ;
- les figures 5A et 5B sont des micrographies réalisées en microscopie électronique à balayage des produits carbonés, tels que collectés après la synthèse, et obtenus à partir d'une solution à 2,5 % de ferrocène dans le toluène, pyrolysée à 850°C pendant 15 min sans évaporateur ;
- les figures 6A et 6B sont des micrographies, réalisées en microscopie électronique à balayage, des produits carbonés, tels que collectés après la synthèse et obtenus à partir d'une solution à 2,5 % de ferrocène dans le toluène pyrolysée à 850°C pendant 30 min, sans évaporateur ;
- la figure 7 est une micrographie, réalisée en microscopie électronique à balayage de l'ensemble de l'échantillon obtenu à partir d'une solution à 5 % de ferrocène dans le xylène pyrolysée à 850°C pendant 15 min ;
- les figures 8A et 8B sont des micrographies réalisées en microscopie électronique à balayage, respectivement, de l'ensemble de l'échantillon et de la tranche d'un paquet de nanotubes obtenus à partir d'une solution à 5 % de ferrocène dans le cyclohexane, pyrolysée à 850°C pendant 15 min;
- les figures 9A à 9D sont des micrographies réalisées en microscopie électronique à balayage de nanotubes quasiment exempts de sous-produits et obtenus à partir d'une solution à 2,5 % de ferrocène dans le cyclohexane, pyrolysée à 850°C pendant 15 min ;
- les figures 9E et 9F sont des micrographies réalisées en microscopie électronique à transmission de nanotubes obtenus à partir d'une solution à 2,5 % de ferrocène dans le cyclohexane, pyrolysée à 850°C pendant 15 minutes ;
- la figure 10 est une micrographie, réalisée en microscopie électronique à balayage de nanotubes alignés perpendiculairement au substrat en quartz et obtenus à partir d'une solution de ferrocène à 2.5 % dans le toluène pyrolysée à 850°C pendant 15 min;
- les figures 11A et 11B sont des micrographies, réalisées en microscopie électronique à balayage de nanotubes déposés sur des tissus de fibre de carbone à partir d'une solution de ferrocène dans le toluène pyrolysée à 850°C.

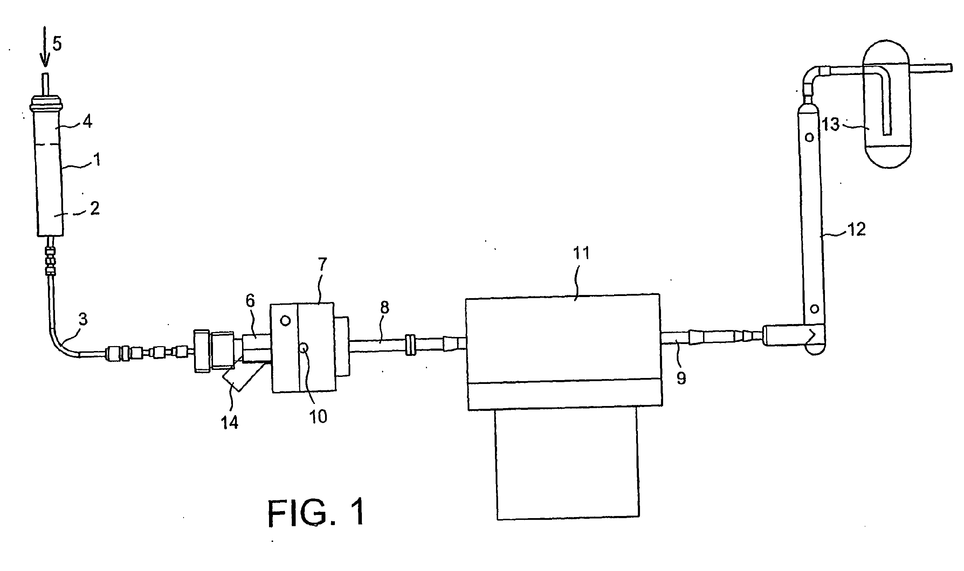

De manière plus détaillée, le procédé selon l'invention peut être mis en oeuvre, par exemple, avec un dispositif, tel que celui qui est décrit sur la figure 1.

Ce dispositif peut, de manière générale, être divisé en quatre ou cinq parties, selon qu'il comporte ou non un évaporateur.

Le dispositif comprend, tout d'abord, des moyens pour alimenter le système d'injection en liquide.

Sur la figure 1, ces moyens comprennent une enceinte ou réservoir (1), par exemple en acier inoxydable, contenant le liquide (2), qui est relié à l'entrée du système d'injection de l'injecteur par un conduit, par exemple en Téflon^{®} (3). L'ensemble de ces moyens d'alimentation est prévu pour pouvoir être soumis à une pression permettant d'acheminer le liquide jusqu'à l'injecteur.

Cette pression peut, par exemple, résulter de l'introduction dans la partie supérieure de l'enceinte ou réservoir, c'est-à-dire dans la partie (4) située au-dessus du niveau de liquide, d'un gaz sous pression (5), à savoir dont la pression est généralement de 1 à 5 fois la pression atmosphérique. Ce gaz peut être analogue au gaz vecteur mais il ne s'agit pas forcément du même gaz, il doit cependant être inerte, il est donc généralement choisi parmi les gaz inertes tels que Ar, He, N₂, ....

L'enceinte ou réservoir (1) est prévue pour être stockée à température ambiante ou à toute température qui n'engendre pas de réactions au sein du liquide, tel qu'une solution.

Le dispositif comprend ensuite des moyens d'injection (6) qui, selon l'invention, comprennent, de préférence, un injecteur du type injecteur de moteur thermique utilisé dans le secteur automobile, des moyens de commande dudit injecteur, constitués généralement par un boîtier de commande contrôlé par un système à microprocesseur et, enfin, une bague de connexion (7) de l'injecteur à un évaporateur (8) ou directement à l'enceinte de réaction ou réacteur (9).

Ladite bague de connexion comprend un circuit de fluide de refroidissement, tel que de l'eau, et une arrivée du gaz vecteur (10).

Le gaz vecteur peut être quelconque, mais il est généralement choisi parmi Ar, He, N₂, H₂,... ou leurs mélanges. De préférence, le gaz vecteur est de l'argon ou un mélange d'argon et d'hydrogène.

Le système d'injection fonctionne, de préférence, en mode pulsé, et permet d'injecter à chaque actionnement un ensemble de gouttelettes d'un volume donné.

A titre d'exemple, on peut réaliser de 0.9 à 1200 injections par minute, chaque injection permettant d'injecter une masse de liquide variant avec le temps d'ouverture de la vanne aiguille et le liquide utilisé, et le volume des gouttelettes variant également avec ces mêmes paramètres.

Pour que l'injection soit possible, il faut que la pression au-dessus du niveau de liquide, situé dans le réservoir ou enceinte de stockage (1), soit supérieure à celle dans l'évaporateur (8) ou le réacteur (9).

Selon l'invention, l'injecteur est composé d'un clapet du type vanne à aiguille qui est piloté en durée et fréquence d'ouverture. A titre d'exemple, la durée d'ouverture est généralement de 0.5 à 12 millisecondes et la fréquence d'ouverture est de 0.016 à 20 Hz.

De plus, la durée d'ouverture permet de contrôler le volume des gouttelettes et la durée totale d'injection est fixée par la fréquence d'injection et le nombre d'impulsions.

A titre d'exemple, la durée totale d'injection est généralement de 5 à 60 minutes.

La mise en oeuvre d'un tel système d'injection spécifique présente un grand nombre d'avantages qui ont déjà été énumérés plus haut.

Sur la figure 1, l'ensemble injecteur (6) et bague de connexion (7) est représenté en coupe latérale, le piquage (14) assure une sortie vers un boîtier de commande à microprocesseur (non représenté) et un orifice (10) permet une arrivée de gaz vecteur.

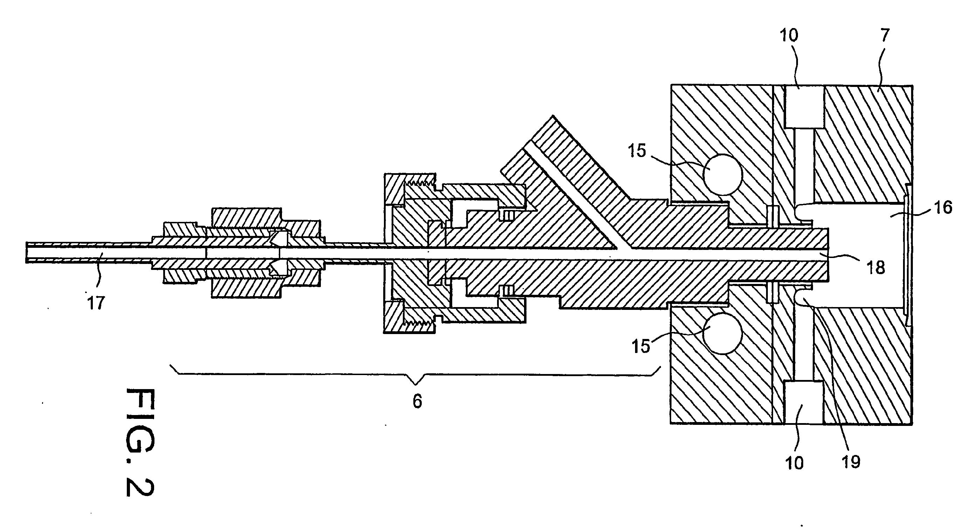

La figure 2 est une vue du dessus agrandie en coupe de l'ensemble injecteur (6) et bague de connexion (7), montrant l'arrivée de gaz vecteur (10), et les alésages (15) permettant la circulation de l'eau de refroidissement. La bague de connexion (7) est reliée en (16) à l'évaporateur.

L'arrivée de gaz vecteur (10), au niveau de la bague de connexion, est conçue de manière à ne pas perturber l'ensemble des gouttelettes émises par l'injecteur (18). Elle est constituée d'une gorge ou gouttière circulaire ou plutôt annulaire (19) située en arrière de la tête d'injection (18) (sur le dessin, il s'agit de l'encoche sur laquelle débouche le conduit 10).

Dans cet ensemble injecteur (6) et bague de connexion (7), la solution ou suspension qui arrive sous pression par la canalisation (17) est mise sous forme finement divisée, par exemple sous la forme de gouttelettes dans l'injecteur (6) et ces gouttelettes sont émises en (18) par la tête d'injection du système d'injection dans l'évaporateur, et acheminées vers le réacteur par le gaz vecteur introduit en (10), puis réparties par la gorge 19, entourant la tête d'injection. Le gaz vecteur entoure ainsi les particules finement divisées sans les perturber.

Le dispositif de la figure 1 peut, éventuellement, comprendre des moyens d'évaporation qui peuvent se présenter, par exemple, sous la forme d'un tube métallique (8) chauffé, placé avant l'enceinte de réaction. Ce système d'évaporation a pour but d'évaporer les gouttelettes émises par l'injecteur.

Ce système d'évaporation est facultatif, en ce sens qu'il n'est pas nécessaire dans toutes les conditions de fonctionnement. En particulier, lorsque les débits de solution injectée sont faibles par rapport à la capacité volumique du réacteur et du débit de gaz vecteur, alors il n'est pas forcément nécessaire d'utiliser l'évaporateur.

Une autre partie du dispositif de la figure 1, pour mettre en oeuvre le procédé de l'invention, est située par l'enceinte de réaction qui est munie de moyens pour la porter à la température de pyrolyse du liquide injecté.

L'enceinte de réaction ou réacteur (9) a généralement une forme tubulaire et est généralement réalisée en un matériau, tel que le quartz, l'alumine, ou tout matériau résistant dans la gamme de températures 600 - 1100°C.

Ces moyens pour porter l'enceinte de réaction à la température de pyrolyse comprennent généralement un four (11), par exemple un four tubulaire ou de section carrée, dans lequel est placée l'enceinte de réaction (9).

Le four (11) est généralement piloté par un programmateur de température.

La dernière partie du dispositif de la figure 1 est la partie d'évacuation des gaz et se compose, par exemple, d'un système de refroidissement des gaz (12) issu des réactions qui se sont produites dans l'enceinte de réaction, suivi d'un piège refroidi à la température de la glace (13) et d'un bulleur dans l'acétone.

En variante, le piège (13) peut être remplacé par un système de filtre.

Un protocole opératoire pour la mise en oeuvre du procédé selon l'invention, avec le dispositif de la figure 1, peut se dérouler de la manière suivante :
- l'enceinte ou réservoir (1) est remplie par le liquide (la solution, ou la suspension colloïdale) (2), préalablement préparée, telles qu'elles ont été décrites plus haut ;
- le gaz vecteur (5) est introduit dans le dispositif ;
   on a vu que le gaz le plus utilisé est l'argon ou un mélange argon/hydrogène ;
- le four (11) est ensuite soumis à un programme de montée en température pour atteindre le domaine de température idéale, qui se situe entre 700 et 1 100°C ;
- dès que le four (11) a atteint la température voulue, l'injecteur (6) est actionné ;
- le fonctionnement du dispositif peut être arrêté après des durées très courtes, de l'ordre, par exemple, de 15 minutes ou il peut être poursuivi plus longtemps, en fonction de la capacité du réacteur.

La durée de fonctionnement, de production, est non seulement conditionnée par la capacité du réacteur, mais aussi par le degré de propreté souhaité des nanotubes produits dans le temps, c'est à dire que la qualité des nanotubes peut éventuellement se dégrader après une certaine durée de production.

Les nanotubes alignés et longs produits par le procédé de l'invention peuvent être utilisés dans des domaines très variés tels que le renforcement mécanique de diverses matrices, par exemple polymères, céramiques, ou métalliques.

Ils peuvent aussi rendre des matériaux plus fonctionnels, par exemple conférer des propriétés de conduction ou de magnétisme à certains polymères.

Les nanotubes produits par le procédé de l'invention, qui sont alignés perpendiculairement à des substrats peuvent être utilisés en tant que sources d'émission de champ, par exemple dans des dispositifs à écrans plats. Enfin, un dernier domaine ou ces matériaux peuvent trouver une application, est celui des nouvelles technologies de l'énergie, comme par exemple les électrodes pour piles à combustible.

L'invention va maintenant être décrite en référence aux exemples suivants, donnés à titre illustratif et non limitatif.

Dans ces exemples, on prépare des nanotubes de carbone par le procédé de l'invention, en mettant en oeuvre avec l'installation décrite sur la figure 1.

### Exemples

### Exemple 1

Dans cet exemple, on prépare des nanotubes alignés, directement dans le réacteur, à partir de solutions de ferrocène dans le toluène.

L'hydrocarbure liquide utilisé est le toluène et le précurseur du métal (Fe) jouant le rôle de catalyseur est le ferrocène.

La dissolution du ferrocène, solide, dans le toluène est effectuée à l'aide d'un bac à ultrasons. La solution résultante est alors versée dans l'enceinte à liquide et une pression de 1 bar d'argon est appliquée afin de pousser le liquide vers l'injecteur.

### Exemple 1A

La solution est une solution à 5% en masse de ferrocène.

On procède à 2 701 injections de gouttelettes à une fréquence de 180 injections par minute. La durée d'ouverture de la vanne aiguille est de 0,75 milliseconde. La durée de l'expérience est donc de 15 minutes et la masse de solution injectée est de 9 grammes soit environ 0,135 gramme de fer jouant le rôle de catalyseur. Le gaz vecteur est de l'argon à raison d'un débit de 1 litre par minute.

Deux températures de pyrolyse sont testées : 850 et 900 °C. Dans les deux cas, un dépôt carboné est obtenu sur les parois du réacteur, et la masse de produit est supérieure à 1 gramme. La masse de produit obtenu augmente avec la température, elle est de 1,141 g à 850°C et de 1,500 g à 900°C. Ce résultat conduit à un rendement en produit carboné par rapport à la masse de catalyseur Fe initiale très élevé. Ainsi, le rendement passe de 744 à 1 009 % lorsque la température passe de 850 à 900°C.

Les observations en microscopie électronique à balayage montrent la présence de nappes de nanotubes alignés à l'image d'un tapis. L'épaisseur de ces nappes, soit la longueur des nanotubes, augmente lorsque la température de pyrolyse augmente, elle est d'environ 150 microns à 850°C et d'environ 400 microns à 900°C. Les vitesses de croissance à ces deux températures de pyrolyse sont respectivement de 10 µm/min. et 27 µm/min. Les observations en microscopie électronique en transmission des nanotubes individuels mettent en évidence la structure multi-feuillets. Dans les conditions de synthèse énoncées ci dessus, il subsiste au sein du produit carboné une faible proportion de sous-produits sous forme d'agglomérats de particules carbonées.

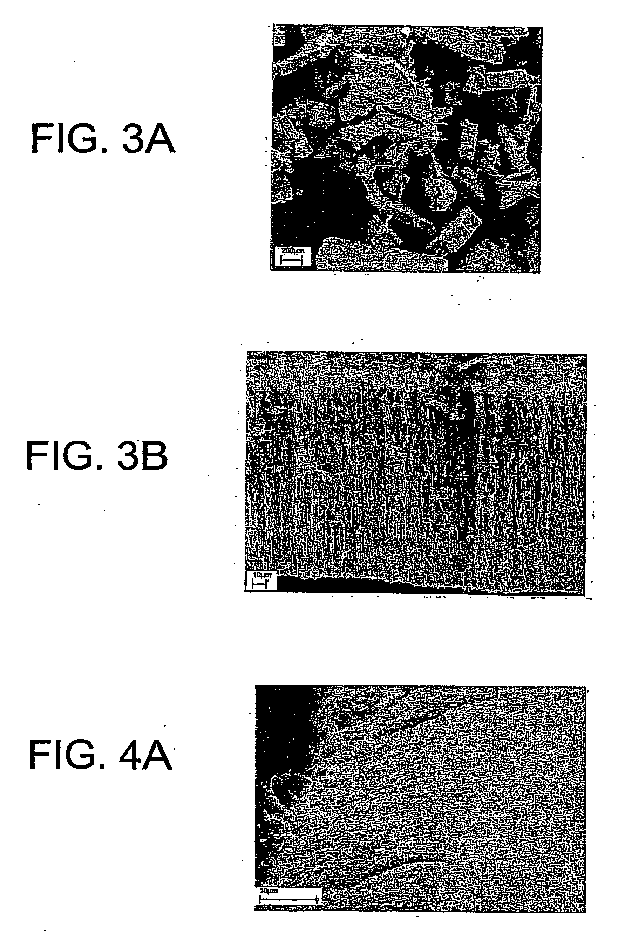

La micrographie de la figure 3A concerne les produits carbonés, tels que collectés après la synthèse, obtenus par pyrolyse à 850°C d'une solution telle que décrite ci-dessus. Elle montre l'ensemble de l'échantillon constitué de plusieurs paquets de nanotubes alignés, ressemblant à des « morceaux de tapis ».

La micrographie de la figure 3B concerne les produits carbonés, tels que collectés après la synthèse obtenue par pyrolyse à 900°C de la solution décrite ci-dessus, elle montre la tranche d'un paquet de nanotubes alignés avec quelques agglomérats de particules.

### Exemple 1B

La solution est une solution à 2,5% en masse de ferrocène.

1 - On a procédé à 2 566 injections de gouttelettes à une fréquence de 171 injections par minute. La durée d'ouverture de la vanne aiguille est de 0,75 milliseconde. La durée de l'expérience est donc de 15 minutes et la masse de solution injectée est de 8 grammes soit environ 0,06 gramme de fer jouant le rôle de catalyseur. Le gaz vecteur est de l'argon à raison d'un débit de 1 litre par minute.

Trois températures de pyrolyse sont testées : 800, 850 et 900 °C. Dans les trois cas, un dépôt carboné est obtenu sur les parois du réacteur, et la masse de produit augmente avec la température de pyrolyse (de 272 mg à 1,029 g). Ce résultat conduit à un rendement en produit carboné par rapport à la masse de catalyseur Fe initiale très élevé qui varie entre 353 et 1 615 % lorsque la température passe de 800 à 900°C.

Comme dans le cas de l'exemple 1A, les observations en microscopie électronique à balayage montrent la présence de nappes de nanotubes alignés. Il est important de noter la quantité négligeable, voire la quasi-absence de sous-produits, contrairement au cas de l'exemple 1A.

L'épaisseur des nappes, soit la longueur des nanotubes augmente lorsque la température de pyrolyse augmente, elle est d'environ 100 microns à 800°C, 280 microns à 850°C et 400 microns à 900°C.

Les vitesses de croissance à ces trois températures de pyrolyse sont respectivement de 7 µm/min., 19 µm/min., et 27 µm/min. Il s'agit aussi de nanotubes multi-feuillets.

Les micrographies des figures 4A à 4D concernent les produits carbonés, tels que collectés après la synthèse obtenue par pyrolyse d'une solution à 2,5 % de ferrocène dans le toluène.

La micrographie de la figure 4A, pour laquelle la synthèse a été réalisée à 800°C, représente la tranche d'un paquet de nanotubes alignés et « propres » avec une quasi-absence de sous-produits.

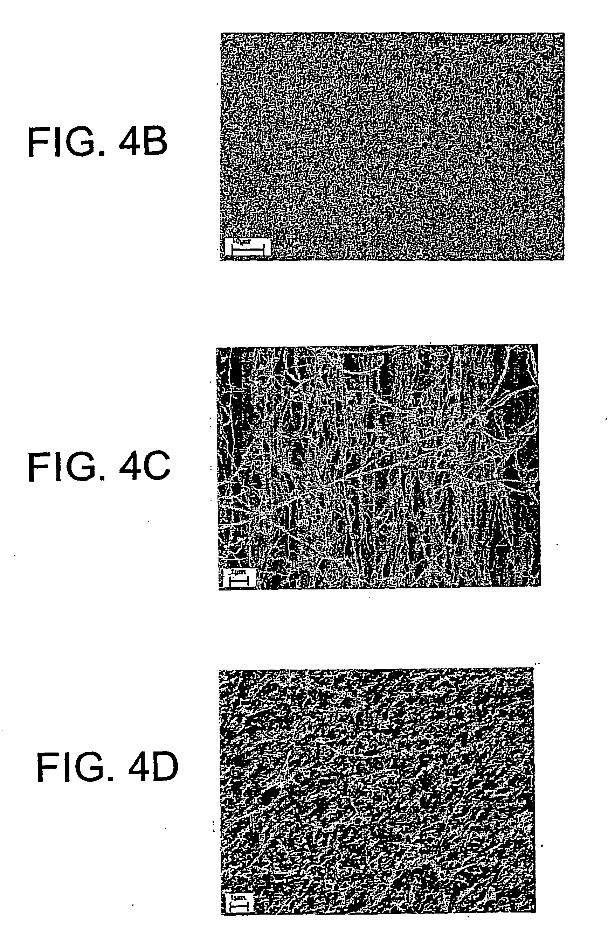

La micrographie de la figure 4B pour laquelle la synthèse a été réalisée à 800°C représente la surface d'un paquet de nanotubes alignés, avec l'extrémité des nanotubes pointant vers le haut.

La micrographie de la figure 4C pour laquelle la synthèse a été réalisée à 850°C est une micrographie à fort grossissement de la tranche d'un paquet de nanotubes alignés, confirmant la quasi-absence de sous-produits.

La micrographie de la figure 4D pour laquelle la synthèse a été réalisée à 850°C est une micrographie à fort grossissement de la surface d'un paquet de nanotubes alignés montrant l'extrémité des nanotubes pointant vers le haut et la propreté de surface.

2 - Dans les mêmes conditions que précédemment, une expérience est réalisée en supprimant la partie évaporateur au niveau du dispositif expérimental. La température de pyrolyse est fixée à 850 °C.

La masse de produit obtenu est de 736 mg et le rendement par rapport à la masse initiale de catalyseur augmente en l'absence d'évaporateur (1 127 % comparé à 840 % en présence de l'évaporateur).

Les nanotubes obtenus sont toujours alignés à l'image d'un tapis et on peut constater la quasi-absence de sous-produits. L'épaisseur des nappes de nanotubes est environ 380 microns. La vitesse de croissance est de 25 µm/min.

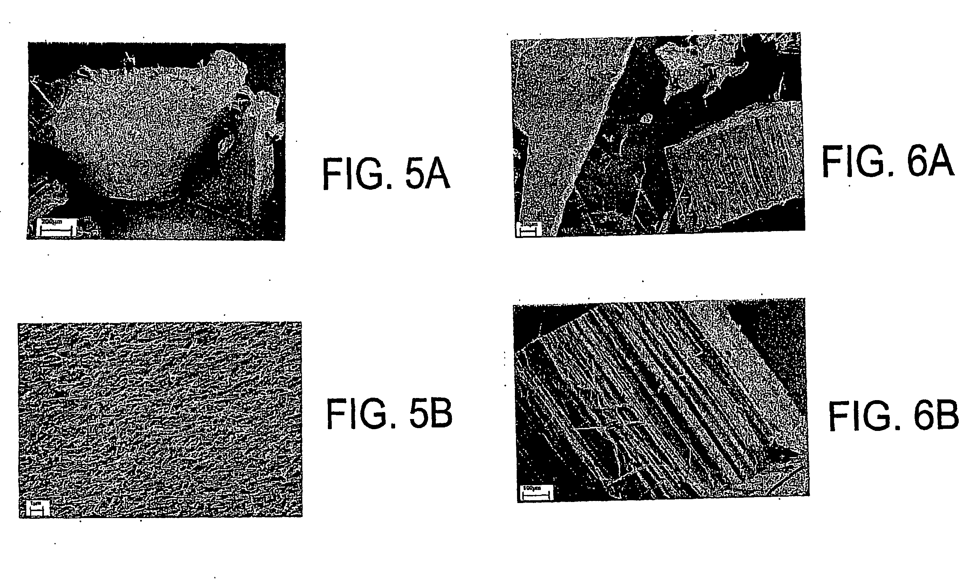

Les micrographies des figures 5A à 5B, réalisées au microscope électronique à balayage, concernent les produits carbonés, tels que collectés après la synthèse, obtenus par pyrolyse à 850°C d'une solution à 2,5 % de ferrocène dans le toluène, sans mettre en oeuvre d'évaporateur.

La micrographie de la figure 5A donne un aspect global de l'échantillon, montrant des paquets de nanotubes alignés, exempts de sous-produits.

La micrographie de la figure 5B montre la surface que l'on peut qualifier de très propre d'un paquet de nanotubes alignés pointant vers le haut.

3 - Avec cette même solution à 2.5% de ferrocène, une expérience a été réalisée en modifiant les paramètres d'injection à savoir 5 132 injections de gouttelettes à une fréquence de 171 injections par minute. La durée d'ouverture de la vanne aiguille est de 0,75 milliseconde. La durée de l'expérience est donc de 30 minutes et la masse de solution injectée est de 16 grammes soit environ 0,12 gramme de fer jouant le rôle de catalyseur. Le gaz vecteur est de l'argon à raison d'un débit de 1 litre par minute. La température de pyrolyse est fixée à 850 °C.

Comme dans le cas des expériences précédentes, le rendement par rapport à la masse initiale de catalyseur reste élevé, à savoir : 1 351 %, et la masse de produit obtenu atteint 1,741 g. L'observation en microscopie électronique à balayage montre des nappes de nanotubes alignés contenant une très forte proportion de nanotubes c'est à dire quasiment exempts de sous-produits. De plus, l'épaisseur des nappes est extrêmement élevée puisqu'elle peut atteindre 1 mm, et le degré d'alignement des nanotubes au sein des nappes est très important. La vitesse de croissance est de 33 µm/min.

Les micrographies des figures 6A et 6B concernent les produits carbonés, tels que collectés après la synthèse, obtenus par pyrolyse à 850°C d'une solution à 2,5 % de ferrocène dans le toluène sans mettre en oeuvre d'évaporateur.

La micrographie de la figure 6A donne un aspect global de l'échantillon montrant des paquets de nanotubes alignés, exempts de sous-produits.

La micrographie de la figure 6B montre la tranche d'un paquet de nanotubes alignés que l'on peut qualifier de propre.

### Exemple 2

Dans cet exemple, on prépare des nanotubes alignés, directement dans le réacteur, à partir de solutions de ferrocène dans le xylène.

L'hydrocarbure liquide utilisé est le xylène et le précurseur du métal (Fe) jouant le rôle de catalyseur est le ferrocène. La dissolution du ferrocène, solide, dans le xylène est effectuée à l'aide d'un bac à ultrasons. La solution résultante est alors versée dans l'enceinte à liquide (voir figure 1) et une pression de 1 bar d'argon est appliquée afin de pousser le liquide vers l'injecteur.

### Exemple 2A

La solution est une solution à 5 % en masse de ferrocène.

On a procédé à 2 701 injections de gouttelettes à une fréquence de 180 injections par minute. La durée d'ouverture de la vanne aiguille est de 0,75 milliseconde. La durée de l'expérience est donc de 15 minutes et la masse de solution injectée est de 10,5 grammes soit environ 0,158 gramme de fer jouant le rôle de catalyseur. Le gaz vecteur est de l'argon à raison d'un débit de 1 litre par minute.

La température de pyrolyse est de 850 °C. Un dépôt carboné a été obtenu sur les parois du réacteur, et la masse de produit est de 1,063 gramme. Ce résultat conduit à un rendement en produit carboné par rapport à la masse de catalyseur Fe initiale de 574 %.

Les observations en microscopie électronique à balayage montrent la présence de nappes de nanotubes alignés à l'image d'un tapis. L'épaisseur de ces nappes, soit la longueur des nanotubes est d'environ 150 microns. La vitesse de croissance est de 10 µm/min. Dans les conditions de synthèse énoncées ci dessus, il subsiste au sein du produit carboné une faible proportion de sous-produits sous forme d'agglomérats de particules carbonées.

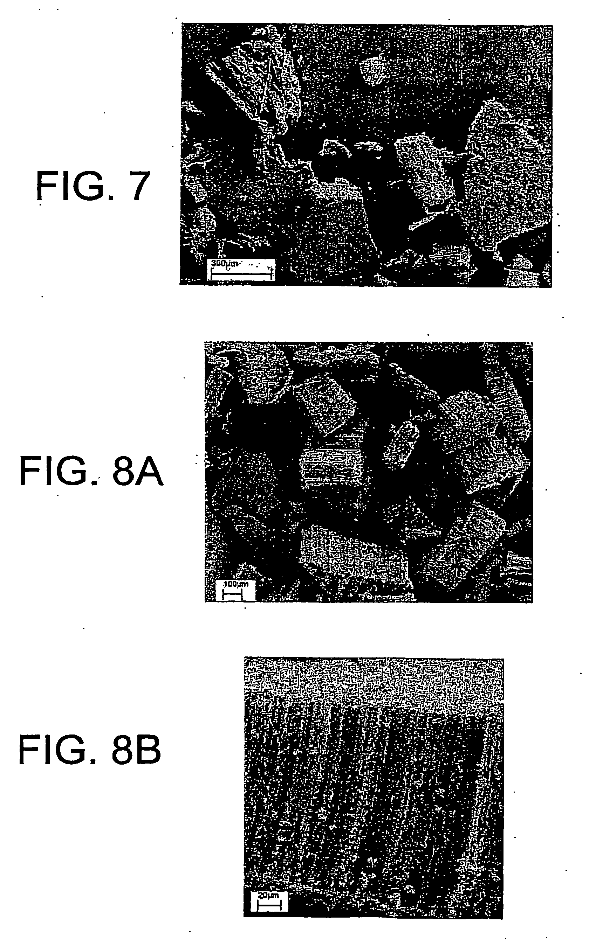

La micrographie de la figure 7, réalisée au microscope électronique à balayage, montre l'ensemble de l'échantillon obtenu après synthèse, qui se présente sous la forme de paquets de nanotubes alignés.

### Exemple 2B

La solution est une solution à 2.5% en masse de ferrocène.

On a procédé à 2 701 injections de gouttelettes à une fréquence de 180 injections par minute. La durée d'ouverture de la vanne aiguille est de 0,75 milliseconde. La durée de l'expérience est donc de 15 minutes et la masse de solution injectée est de 11,2 grammes soit environ 0,084 gramme de fer jouant le rôle de catalyseur. Le gaz vecteur est de l'argon à raison d'un débit de 1 litre par minute.

La température de pyrolyse est de 850 °C. La masse de dépôt carboné obtenu sur les parois du réacteur est 1,096 gramme. Ce résultat conduit à un rendement en produit carboné par rapport à la masse de catalyseur Fe initiale de 1 205 %.

L'épaisseur des nappes de nanotubes observées en microscopie électronique à balayage est d'environ 200 microns. La vitesse de croissance est de 13 µm/min. Dans ce cas, il subsiste encore au sein du produit carboné une faible proportion de sous-produits qui est plus faible que dans le cas des conditions de synthèse mentionnées dans l'exemple 2A.

### Exemple 3

Dans cet exemple, on prépare des nanotubes alignés, directement dans le réacteur, à partir de solutions de ferrocène dans le cyclohexane.

L'hydrocarbure liquide utilisé était le cyclohexane et le précurseur du métal (Fe) jouant le rôle de catalyseur était le ferrocène. La dissolution du ferrocène, solide, dans le cyclohexane est effectuée à l'aide d'un bac à ultrasons. La solution résultante est alors versée dans l'enceinte à liquide (voir la figure 1) et une pression de 1 bar d'argon est appliquée afin de pousser le liquide vers l'injecteur.

### Exemple 3A

La solution est une solution à 5% en masse de ferrocène.

On a procédé à 2 701 injections de gouttelettes à une fréquence de 180 injections par minute. La durée d'ouverture de la vanne aiguille est de 0,75 milliseconde. La durée de l'expérience est donc de 15 minutes et la masse de solution injectée est de 9,1 grammes soit environ 0,137 gramme de fer jouant le rôle de catalyseur. Le gaz vecteur est de l'argon à raison d'un débit de 1 litre par minute.

La température de pyrolyse est de 850 °C. La masse de dépôt carboné obtenu sur les parois du réacteur est 691 mg. Ce résultat conduit à un rendement en produit carboné par rapport à la masse de catalyseur Fe initiale de 406 %.

Les observations en microscopie électronique à balayage montrent la présence de nappes de nanotubes alignés à l'image d'un tapis. L'épaisseur de ces nappes, soit la longueur des nanotubes est d'environ 200 microns. La vitesse de croissance est de 13 µm/min. Dans les conditions de synthèse énoncées ci dessus, il subsiste au sein du produit carboné une faible proportion de sous-produits sous forme d'agglomérats de particules carbonées répartis sur la surface ou sur les tranches des nappes de nanotubes.

La micrographie de la figure 8A, réalisée en microscopie électronique à balayage, montre l'ensemble de l'échantillon, qui se présente sous la forme de paquets de nanotubes alignés.

La micrographie de la figure 8B montre la tranche d'un paquet de nanotubes alignés contenant une faible quantité de sous-produits sous la forme d'agglomérats de particules.

### Exemple 3B

La solution est une solution à 2,5% en masse de ferrocène.

On a procédé à 2 701 injections de gouttelettes à une fréquence de 180 injections par minute. La durée d'ouverture de la vanne aiguille est de 0,75 milliseconde. La durée de l'expérience est donc de 15 minutes et la masse de solution injectée est de 8,6 grammes soit environ 0,064 gramme de fer jouant le rôle de catalyseur. Le gaz vecteur est de l'argon à raison d'un débit de 1 litre par minute.

La température de pyrolyse est de 850 °C. La masse de dépôt carboné obtenu sur les parois du réacteur est de 1,168 gramme. Ce résultat conduit à un rendement en produit carboné par rapport à la masse de catalyseur Fe initiale de 1 710%.

Les nappes de nanotubes observées en microscopie électronique à balayage sont extrêmement "propres" c'est à dire quasiment exemptes de sous-produits, et leur épaisseur peut atteindre 950 microns. La vitesse de croissance est de 63 µm/min.

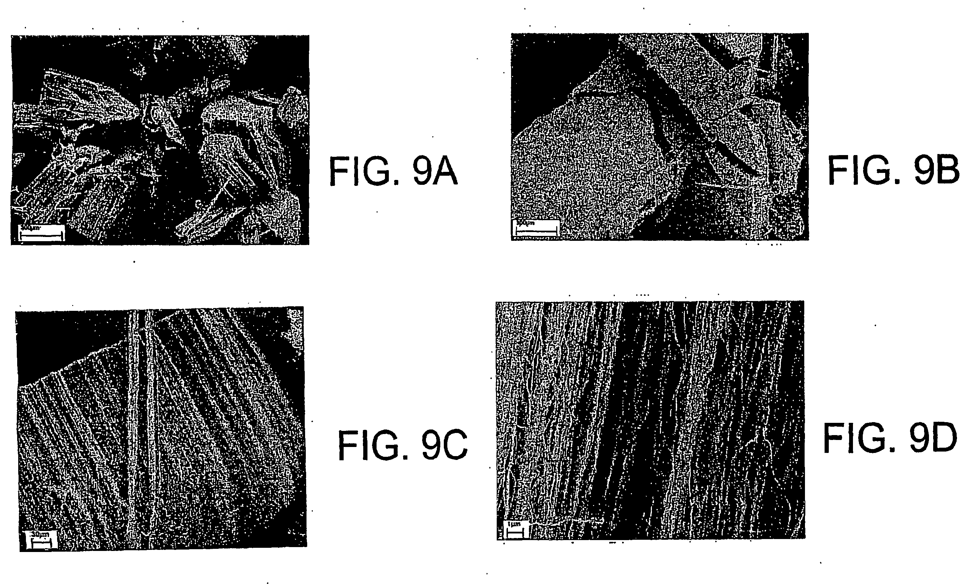

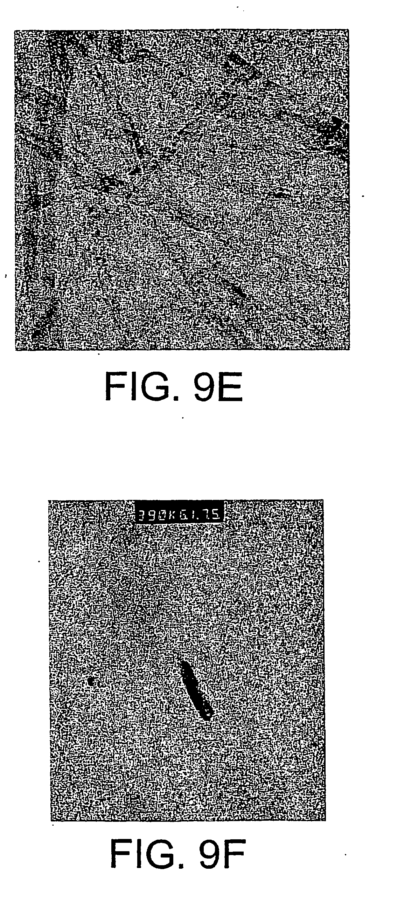

Les micrographies des figures 9A à 9D, réalisées en microscopie électronique à balayage montrent respectivement : l'ensemble de l'échantillon qui se présente sous la forme de paquets de nanotubes alignés, très propres (figures 9A et 9B), la tranche d'un paquet de nanotubes alignés, quasiment exempte de sous-produits (figure 9C) et, enfin, le degré d'alignement élevé des nanotubes au sein de la tranche d'un paquet de nanotubes (figure 9D).

La caractérisation des produits obtenus en mettant en oeuvre le procédé de l'invention selon cet exemple a été poursuivie en procédant à des analyses en Microscopie Electronique à Transmission (MET), en Microscopie Electronique à Transmission Haute Résolution (HRMET), et à des analyses par diffraction des Rayons (DRX). Ces analyses, et en particulier les clichés réalisés en Microscopie Electronique à Transmission (figures 9E à 9F) montrent que les nanotubes sont très rectilignes par rapport à l'ensemble des nanotubes produits par un procédé de CVD classique, et qu'ils présentent une structure bien définie, avec peu de défauts.

### Conclusion

Au vu des différents essais réalisés dans les exemples 1 à 3, il semble que quel que soit l'hydrocarbure utilisé, les solutions contenant 2,5 % de ferrocène permettent la production de nanotubes les plus propres, et bien alignés.

De plus, la longueur peut être contrôlée en particulier par la durée et la température de pyrolyse et par la nature de l'hydrocarbure liquide utilisé. Ainsi, la pyrolyse de solutions de toluène à 2.5 % en ferrocène pendant 30 min ainsi que la pyrolyse de solutions de cyclohexane à 2,5 % de ferrocène pendant 15 min. permet la production de nanotubes très longs (de l'ordre du millimètre) et extrêmement propres.

### Exemple 4

Dans cet exemple, on prépare des nanotubes sur des substrats à partir de solutions de ferrocène dans le toluène.

L'hydrocarbure liquide utilisé est le toluène et le précurseur du métal (Fe) jouant le rôle de catalyseur est le ferrocène à raison de 2,5 % dans la solution. La dissolution du ferrocène, solide, dans le toluène est effectuée à l'aide d'un bac à ultrasons. La solution résultante est alors versée dans l'enceinte à liquide (voir figure 1) et une pression de 1 bar d'argon est appliquée afin de pousser le liquide vers l'injecteur.

### Exemple 4A

Croissance sur des substrats de quartz et de silicium.

Les substrats en quartz ou silicium ont une section carrée d'environ 1 x 1 cm. Ils sont préalablement placés dans le réacteur de pyrolyse.

On procède à 2 566 injections de gouttelettes à une fréquence de 171 injections par minute. La durée d'ouverture de la vanne aiguille est de 0,75 milliseconde. La durée de l'expérience est donc de 15 minutes et la masse de solution injectée était de 8 grammes soit environ 0,06 gramme de fer jouant le rôle de catalyseur. Le gaz vecteur est de l'argon à raison d'un débit de 1 litre par minute.

La température de pyrolyse est de 850 °C. Un dépôt carboné est obtenu à la fois sur les parois du réacteur et sur le substrat de quartz ou de silicium. A l'oeil nu, ce dépôt paraît relativement homogène.

Les observations en microscopie électronique à balayage montrent que le dépôt carboné est constitué de nanotubes alignés perpendiculairement au substrat de quartz ou de silicium. Le degré d'alignement est élevé et les nanotubes sont quasiment exempts de sous produits. L'épaisseur de la nappe de nanotubes déposée sur les substrats est d'environ 370 microns. La vitesse de croissance est de 24 µm/min.

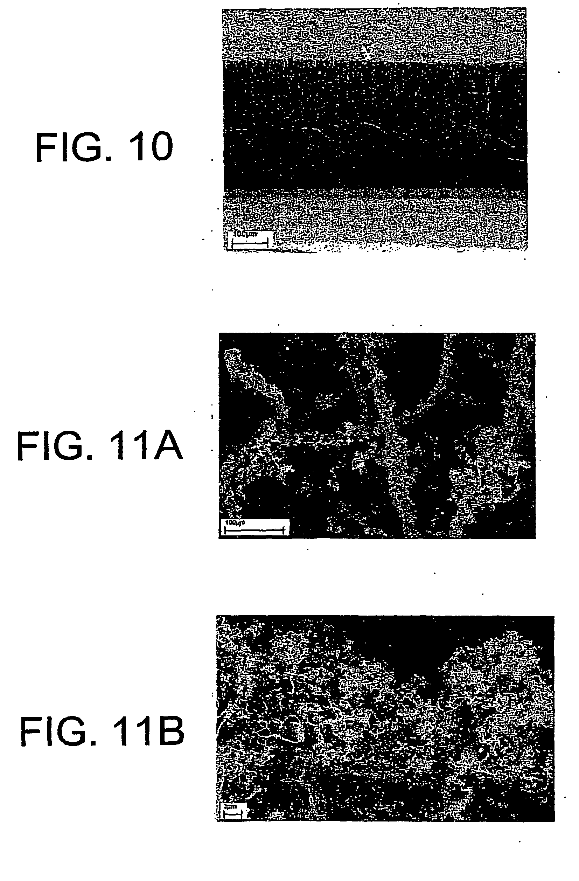

La micrographie de la figure 10, réalisée en microscopie électronique à balayage, montre les nanotubes alignés perpendiculairement à la surface d'un substrat de quartz.

### Exemple 4B

### Croissance sur des tissus de fibres de carbone.

Le tissu de fibres de carbone à section carrée d'environ 1 x 1 cm est préalablement placé dans le réacteur de pyrolyse.

Les paramètres d'injection et de pyrolyse sont identiques à ceux mentionnés dans l'exemple 4A. Un dépôt carboné est obtenu à la fois sur les parois du réacteur et à la surface du tissu carboné. A l'oeil nu, ce dépôt paraît relativement homogène.

Les observations en microscopie électronique à balayage montrent la formation de "nodules" à la fois à la surface des fibres, mais également dans les espaces inter fibres. Ces "nodules" sont composés de nanotubes enchevêtrés et de quelques particules.

Les micrographies des figures 11A et 11B, réalisées en microscopie électronique à balayage, montre des nanotubes enchevêtrés déposés à la surface des fibres ou dans les espaces inter-fibres.

### Conclusion

Il ressort de l'exemple 4 qu'il est donc possible de faire croître des nanotubes alignés et "propres" sur des substrats de quartz ou de silicium.

Il est également possible de faire croître, sans aucune imprégnation préalable de catalyseur métallique, des nanotubes sur des tissus de fibres de carbone et en particulier sur les fibres. Ce résultat est prometteur en vue de l'élaboration de composites carbone/carbone dont l'interface au niveau des fibres ou l'espace inter-fibres serait renforcé par des nanotubes de carbone.

### BIBLIOGRAPHIE

[1] C.N.R. Rao, R. Sen, B. C. Satishkumar, A Govindaraj, Chem. Comm, 1998.
[2] B. C. Satishkumar, A Govindaraj, C.N.R. Rao, Chem. Phys. Lett. 307, 158-162, 1999.
[3] S. Huang, L. Dai, A. W. H. Mau, J. Phys. Chem.B, 103, 4222-4227, 1999.
[4] L. Dai, S. Huang, brevet WO0063115.
[5] N. Grobert et al, Appl. Phys. A, Materials Science and Processing, 2000.
[6] H. Ago et al, Appl. Phys. Lett., vol 77 N°1, 2000.
[7] X.Y. Zhang et al, Materials Science and engineering, A 308, 9-12, 2001.
[8] C.J. Lee et al, Chem. Phys. Lett, 341, 245-249, 2001.
[9] A. Cao et al, Applied Surface Science, 181, 234-238, 2001.
[10] B. Q. Wei et al, Carbon, 40, 47-51, 2002.
[11] D. Narducci, L. Toselli, P. Milani, Electrochemical Society Proceedings, volume 98-23, 1999.
[12] R. Andrews et al, Chem Phys Lett, 303, 467-474, 1999.
[13] R. Kamalakaran et al, Appl. Phys. Lett., vol 77 n° 21, 2000.
[14] M. Mayne, N.Grobert, M. Terrones, R. Kamalakaran, M. Ruhle, H.W. Kroto, D.R.M Walton, "Pyrolytic production of aligned carbon nanotubes from homogeneously dispersed benzene-based aerosols" Chem. Phys. Lett. 338, 101. 2001.
[15] N. Grobert, M. Mayne, M. Terrones, J. Sloan, R.E. Dunin-Borkowski, R. Kamalakaran, T. Seeger, H. Terrones, M. Ruhle, D.R.M. Walton, H.W. Kroto, J.L. Hutchison, Chemical Communications 5, 471, 2001.
[16] H. Ago, S. Ohshima, K. Uchida, M. Yumura, J. Phys. Chem. B., vol 105, N°43, 2001.

## Revendications

1. Procédé de préparation de nanotubes de carbone ou de nanotubes de carbone dopés à l'azote, par pyrolyse dans une enceinte de réaction d'un liquide contenant au moins un hydrocarbure liquide précurseur de carbone ou au moins un composé liquide précurseur de carbone et d'azote constitué d'atomes de carbone, d'azote et éventuellement d'atomes d'hydrogène et/ou d'autres éléments chimiques tels que l'oxygène, et, éventuellement, au moins un composé de métal précurseur d'un métal catalyseur, dans lequel ledit liquide sous pression, est mis sous la forme de particules liquides finement divisées, telles que des gouttelettes, par un système d'injection périodique, et les particules finement divisées, telles que des gouttelettes, ainsi formées, sont véhiculées par un courant de gaz vecteur et introduites dans l'enceinte de réaction, où sont réalisés le dépôt et la croissance des nanotubes de carbone ou des nanotubes de carbone dopés à l'azote.

2. Procédé selon la revendication 1, dans lequel ledit système d'injection est du type injecteur de moteur thermique automobile.

3. Procédé selon la revendication 2, dans lequel le système d'injection est muni d'un clapet du type vanne à aiguille.

4. Procédé selon la revendication 1, dans lequel les nanotubes sont régulièrement disposés, arrangés, dans l'espace et sont généralement alignés les uns par rapport aux autres et sensiblement perpendiculaires à la paroi de l'enceinte de réaction.

5. Procédé selon l'une quelconque des revendications 1 à 4, dans lequel les nanotubes ont une longueur de quelques micromètres, par exemple de 1 à 10 µm jusqu'à quelques millimètres par exemple, de 1 à 10 mm.

6. Procédé selon la revendication 1, dans lequel ledit hydrocarbure liquide est choisi parmi les hydrocarbures liquides non aromatiques.

7. Procédé selon la revendication 6, dans lequel ledit hydrocarbure liquide est choisi parmi les alcanes de 5 à 20C, tels que le n-pentane, l'isopentane, l'hexane, l'heptane et l'octane ; les alcènes liquides de 5 à 20C ; les alcynes liquides de 4 à 20C ; et les cycloalcanes de 5 à 15C, tels que le cyclohexane.

8. Procédé selon l'une quelconque des revendications 1 à 5, dans lequel ledit hydrocarbure liquide est choisi parmi les hydrocarbures aromatiques de 6 à 12 C, éventuellement substitués, tels que le benzène, le toluène et le xylène.

9. Procédé selon l'une quelconque des revendications 1 à 5, dans lequel ledit composé liquide constitué d'atomes de carbone, d'azote et éventuellement d'atomes d'hydrogène et/ou d'autres éléments chimiques tels que l'oxygène, est choisi parmi les amines liquides par exemple la benzylamine, ou les nitriles tels que l'acétonitrile.

10. Procédé selon l'une quelconque des revendications 1 à 9, dans lequel ledit liquide se présente sous la forme d'une solution du(des) composé(s) de métal précurseur d'un métal catalyseur, dans le ou les hydrocarbure(s) liquide(s) ou dans le ou les composé(s) liquide(s) constitué(s) d'atomes de carbone, d'azote et éventuellement d'atomes d'hydrogène et/ou d'autres éléments chimiques tels que l'oxygène.

11. Procédé selon la revendication 10, dans lequel ledit composé de métal précurseur d'un métal catalyseur est choisi parmi les composés constitués de carbone, d'hydrogène, éventuellement d'azote, et/ou d'oxygène et d'au moins un métal.

12. Procédé selon l'une quelconque des revendications 1 à 11, dans lequel ledit composé de métal précurseur d'un métal catalyseur est choisi parmi les sels de métaux et les composés organométalliques, tels que les métallocènes.

13. Procédé selon la revendication 12, dans lequel lesdits sels de métaux sont choisis parmi les sels de métaux dont le contre-ion du métal est constitué par un hétéroatome tel qu'un halogénure.

14. Procédé selon la revendication 12, dans lequel lesdits sels de métaux sont choisis parmi les nitrates, les acétates, les acétylacétonates et les phtalocyanines de métaux, tels que la phtalocyanine de fer et la phtalocyanine de nickel.

15. Procédé selon l'une quelconque des revendications 11 à 14, dans lequel ledit métal est choisi parmi le fer, le cobalt, le nickel, le ruthénium, le palladium, et le platine.

16. Procédé selon l'une quelconque des revendications 12 et 15, dans lequel ledit composé organométallique est choisi parmi le ferrocène, le nickelocène, le cobaltocène et le ruthénocène.

17. Procédé selon l'une quelconque des revendications 11 à 16, dans lequel la solution contient, en outre, un ou plusieurs composé (s) favorisant la croissance des nanotubes de carbone ou des nanotubes de carbone dopés à l'azote, tels que le thiophène ou des précurseurs, par exemple des nitrates ou des alcoxydes, de terres rares, telles que l'yttrium, le lanthane et le cérium.

18. Procédé selon l'une quelconque des revendications 11 à 17, dans lequel la concentration du composé de métal précurseur d'un métal catalyseur dans la solution est généralement de 0,2 à 15 % en masse.

19. Procédé selon l'une quelconque des revendications 11 à 18, dans lequel la solution est une solution à 2,5 % en masse de ferrocène, de préférence dans le toluène et/ou le cyclohexane.

20. Procédé selon l'une quelconque des revendications 1 à 9, dans lequel ledit liquide se présente sous la forme d'une suspension colloïdale de nanoparticules métalliques dans ledit au moins un hydrocarbure liquide ou dans ledit au moins un composé liquide constitué d'atomes de carbone, d'azote et éventuellement d'atomes d'hydrogène et/ou d'autres éléments chimiques, tels que l'oxygène.

21. Procédé selon la revendication 20, dans lequel lesdites nanoparticules métalliques sont choisies parmi les nanoparticules de fer, nickel, cobalt, ruthénium, palladium, platine et de leurs mélanges ou de leurs alliages.

22. Procédé selon l'une quelconque des revendications 20 et 21, dans lequel un ou plusieurs composé (s) de métal précurseur d'un métal catalyseur, tels que décrits dans l'une quelconque des revendications 10 à 16 est (sont), en outre, dissout (s) dans ladite suspension colloïdale.

23. Procédé selon l'une quelconque des revendications 1 à 22, dans lequel lesdites particules liquides finement divisées, telles que des gouttelettes ont une dimension, par exemple un diamètre, de quelques dixièmes de micromètres à quelques dizaines de micromètres, de préférence de 0,1 à 20 micromètres.

24. Procédé selon l'une quelconque des revendications 1 à 23, dans lequel ledit système d'injection périodique fonctionne par impulsions.

25. Procédé selon la revendication 24, dans lequel le nombre d'impulsions est de 0.96 à 1200 par minute.

26. Procédé selon l'une quelconque des revendications 24 et 25, dans lequel le volume de liquide injecté à chaque impulsion est de 2 à 100 microlitres.

27. Procédé selon l'une quelconque des revendications 1 à 26, dans lequel les particules liquides finement divisées, telles que des gouttelettes, formées par le système d'injection sont, préalablement à leur introduction dans l'enceinte de réaction, évaporées dans un dispositif d'évaporation.

28. Procédé selon l'une quelconque des revendications 1 à 27, dans lequel la pyrolyse est réalisée à une température de 600 à 1 100°C, de préférence de 800 à 1 000°C, de préférence encore de 800 à 900°C.

29. Procédé selon l'une quelconque des revendications 1 à 28, dans lequel la pyrolyse est réalisée pendant une durée de 5 à 60 min, de préférence de 15 à 30 minutes.

30. Procédé selon l'une quelconque des revendications 1 à 29, dans lequel la pression dans l'enceinte de réaction est une pression contrôlée, par exemple inférieure à la pression atmosphérique.

31. Procédé selon l'une quelconque des revendications 1 à 30, dans lequel le liquide contient un composé de métal précurseur d'un métal catalyseur et le dépôt et la croissance des nanotubes sont réalisés directement sur les parois de l'enceinte de réaction.

32. Procédé selon l'une quelconque des revendications 1 à 30, dans lequel le dépôt et la croissance des nanotubes sont réalisés sur un substrat placé à l'intérieur de l'enceinte de réaction.

33. Procédé selon la revendication 32, dans lequel le liquide ne contient pas de composé de métal précurseur d'un métal catalyseur et le substrat est pourvu d'un dépôt de catalyseur.

34. Procédé selon la revendication 32, dans lequel le liquide contient un ou plusieurs composé(s) de métal précurseur d'un métal catalyseur et le substrat est pourvu ou n'est pas pourvu d'un dépôt de catalyseur.

35. Procédé selon la revendication 32, dans lequel le substrat est choisi parmi les substrats en quartz, les substrats en silicium, et les substrats en oxydes métalliques, tels que Al₂O₃, Y₂O₃, MgO et ZrO₂.

36. Procédé selon la, revendication 32, dans lequel le substrat est un tissu de fibres de carbone ou de fibres de carbone dopées à l'azote.

37. Procédé selon la revendication 33 ou 34, dans lequel le dépôt de catalyseur comprend un ou plusieurs métaux choisis parmi les métaux de transition, tels que Fe, Ni, et Co, et d'autres métaux tels que Pd, Ru et Pt.

38. Procédé selon l'une quelconque des revendications 33, 34 et 37, dans lequel le dépôt de catalyseur se présente sous la forme d'une couche mince.

39. Procédé selon l'une quelconque des revendications 33, 34 et 37, dans lequel le catalyseur est déposé de manière discontinue.

40. Procédé selon la revendication 39, dans lequel le dépôt de catalyseur se présente sous la forme d'un ensemble d'entités discrètes, par exemple de gouttes, plots, taches ou points de catalyseur.

41. Procédé selon la revendication 40, dans lequel le dépôt est ordonné et lesdites entités discrètes sont disposées sous la forme d'un réseau ou motif, par exemple un réseau de lignes ou rangées interconnectées.

42. Procédé selon la revendication 32, dans lequel le substrat est constitué par une couche de nanotubes ou plusieurs couches de nanotubes superposées.

43. Dispositif pour la mise en oeuvre du procédé selon l'une quelconque des revendications 1 à 42, comprenant :
- une enceinte de réaction dans laquelle sont préparés des nanotubes de carbone ou des nanotubes de carbone dopés à l'azote par pyrolyse d'un liquide contenant au moins un hydrocarbure liquide précurseur de carbone ou au moins un composé liquide, précurseur de carbone et d'azote, constitué d'atomes de carbone, d'azote et éventuellement d'atomes d'hydrogène et/ou d'autres éléments chimiques tels que l'oxygène, et, éventuellement, au moins un composé de métal précurseur d'un métal catalyseur ;
- des moyens pour mettre ledit liquide sous pression sous la forme de particules liquides finement divisées, telles que des gouttelettes, pour véhiculer lesdites particules finement divisées, telles que des gouttelettes, par un courant de gaz vecteur et les introduire dans l'enceinte de réaction ;
- dispositif dans lequel lesdits moyens pour mettre ledit liquide sous la forme de particules liquide finement divisées pour véhiculer celles-ci et les introduire dans l'enceinte de réaction comprennent un système d'injection périodique, muni d'une tête d'injection, et une bague de connexion, dans laquelle est prévue l'arrivée de gaz vecteur, reliant le système d'injection à l'enceinte de réaction, éventuellement par l'intermédiaire d'un dispositif d'évaporation.

44. Dispositif selon la revendication 43, dans lequel la paroi latérale de bague de connexion comporte au moins un tube d'arrivée de gaz vecteur, ledit tube d'arrivée de gaz vecteur débouchant dans une gorge annulaire entourant la tête d'injection du système d'injection des particules liquides, et est placée en arrière de celle-ci, afin d'entourer sans les perturber les particules liquides finement divisées.

## Claims

1. A method for preparing carbon nanotubes or nitrogen-doped carbon nanotubes by pyrolysis, in a reaction chamber, of a liquid containing at least one liquid hydrocarbon precursor of carbon or at least one liquid compound precursor of carbon and nitrogen consisting of carbon atoms, nitrogen atoms and optionally hydrogen atoms and/or atoms of other chemical elements such as oxygen, and optionally at least one metal compound precursor of a catalyst metal, in which said liquid under pressure is formed into finely divided liquid particles, such as droplets, by a periodic injection system, and the finely divided particles, such as droplets, formed in this way, are conveyed by a carrier gas stream and introduced into the reaction chamber, where the deposition and growth of the carbon nanotubes or nitrogen-doped carbon nanotubes take place.

2. The method as claimed in claim 1, in which said injection system is of the automobile heat engine injector type.

3. The method as claimed in claim 2, in which the injection system is provided with a valve which is a needle-type valve.

4. The method as claimed in claim 1, in which the nanotubes are regularly disposed or arranged in space, and are generally aligned with respect to one another and are substantially perpendicular to the wall of the reaction chamber.

5. The method as claimed in any one of claims 1 to 4, in which the nanotubes have a length of from a few micrometers, for example 1 to 10 µm, up to a few millimeters, for example 1 to 10 mm.

6. The method as claimed in claim 1, in which said liquid hydrocarbon is selected from nonaromatic liquid hydrocarbons.

7. The method as claimed in claim 6, in which said liquid hydrocarbon is selected from C5 to C20 alkanes such as n-pentane, isopentane, hexane, heptane and octane; C5 to C20 liquid alkenes; C4 to C20 liquid alkynes; and C5 to C15 cycloalkanes such as cyclohexane.

8. The method as claimed in any one of claims 1 to 5, in which said liquid hydrocarbon is selected from optionally substituted C6 to C12 aromatic hydrocarbons such as benzene, toluene and xylene.

9. The method as claimed in any one of claims 1 to 5, in which said liquid compound consisting of carbon atoms, nitrogen atoms and optionally hydrogen atoms and/or atoms of other chemical elements such as oxygen is selected from liquid amines, for example benzylamine, or nitriles such as acetonitrile.

10. The method as claimed in any one of claims 1 to 9, in which said liquid is in the form of a solution of the metal compound(s) precursor of a catalyst metal in the liquid hydrocarbons(s) or in the liquid compound(s) consisting of carbon atoms, nitrogen atoms and optionally hydrogen atoms and/or atoms of other chemical elements such as oxygen.

11. The method as claimed in claim 10, in which said metal compound precursor of a catalyst metal is selected from the compounds consisting of carbon, hydrogen, optionally nitrogen and/or oxygen and at least one metal.

12. The method as claimed in any one of claims 1 to 11, in which said metal compound precursor of a catalyst metal is selected from metal salts and organometallic compounds, such as metallocenes.

13. The method as claimed in claim 12, in which said metal salts are selected from metal salts in which the counterion of the metal consists of a heteroatom such as a halide.

14. The method as claimed in claim 12, in which said metal salts are selected from metal nitrates, acetates, acetylacetonates and phthalocyanines, such as iron phthalocyanine and nickel phthalocyanine.

15. The method as claimed in any one of claims 11 to 14, in which said metal is selected from iron, cobalt, nickel, ruthenium, palladium and platinum.

16. The method as claimed in either one of claims 12 and 15, in which said organometallic compound is selected from ferrocene, nickelocene, cobaltocene and ruthenocene.

17. The method as claimed in any one of claims 11 to 16, in which the solution further contains one or more compound(s) promoting the growth of the carbon nanotubes or nitrogen-doped carbon nanotubes, such as thiophene or precursors, for example nitrates or alkoxides, of rare earths such as yttrium, lanthanum and cerium.

18. The method as claimed in any one of claims 11 to 17, in which the concentration of the metal compound precursor of a catalyst metal in the solution is generally from 0.2 to 15% by mass.

19. The method as claimed in any one of claims 11 to 18, in which the solution is a 2.5% by mass solution of ferrocene, preferably in toluene and/or cyclohexane.

20. The method as claimed in any one of claims 1 to 9, in which said liquid is in the form of a colloidal suspension of metal nanoparticles in said at least one liquid hydrocarbon or in said at least one liquid compound consisting of carbon atoms, nitrogen atoms and optionally hydrogen atoms and/or atoms of other chemical elements such as oxygen.

21. The method as claimed in claim 20, in which said metal nanoparticles are selected from nanoparticles of iron, nickel, cobalt, ruthenium, palladium, platinum and of their mixtures or their alloys.

22. The method as claimed in either one of claims 20 and 21, in which one or more metal compound(s) precursor of a catalyst metal, as described in any one of claims 10 to 16, is (are) also dissolved in said colloidal suspension.

23. The method as claimed in any one of claims 1 to 22, in which said finely divided liquid particles such as droplets have a dimension, for example a diameter, of from a few tenths of micrometers to a few tens of micrometers, preferably from 0.1 to 20 micrometers.

24. The method as claimed in any one of claims 1 to 23, in which said periodic injection system operates in pulses.

25. The method as claimed in claim 24, in which the number of pulses is from 0.96 to 1200 per minute.

26. The method as claimed in either one of claims 24 and 25, in which the volume of liquid injected in each pulse is from 2 to 100 microliters.

27. The method as claimed in any one of claims 1 to 26, in which the finely divided liquid particles such as droplets formed by the injection system are evaporated in an evaporation device before they are introduced into the reaction chamber.

28. The method as claimed in any one of claims 1 to 27, in which the pyrolysis is carried out at a temperature of from 600 to 1100°C, preferably from 800 to 1000°C, more preferably from 800 to 900°C.

29. The method as claimed in any one of claims 1 to 28, in which the pyrolysis is carried out for a time of from 5 to 60 min, preferably from 15 to 30 minutes.

30. The method as claimed in any one of claims 1 to 29, in which the pressure in the reaction chamber is a controlled pressure, for example less than atmospheric pressure.

31. The method as claimed in any one of claims 1 to 30, in which the liquid contains a metal compound precursor of a catalyst metal, and the deposition and growth of the nanotubes take place directly on the walls of the reaction chamber.

32. The method as claimed in any one of claims 1 to 30, in which the deposition and growth of the nanotubes take place on a substrate placed inside the reaction chamber.

33. The method as claimed in claim 32, in which the liquid does not contain a metal compound precursor of a catalyst metal, and the substrate is provided with a catalyst deposit.

34. The method as claimed in claim 32, in which the liquid contains one or more metal compound(s) precursor of a catalyst metal, and the substrate may or may not be provided with a catalyst deposit.

35. The method as claimed in claim 32, in which the substrate is selected from quartz substrates, silicon substrates and substrates made of metal oxides such as Al₂O₃, Y₂O₃, MgO and ZrO₂.

36. The method as claimed in claim 32, in which the substrate is a fabric of carbon fibers or nitrogen-doped carbon fibers.

37. The method as claimed in claim 33 or 34, in which the catalyst deposit comprises one or more metals selected from transition metals such as Fe, Ni and Co, and other metals such as Pd, Ru and Pt.

38. The method as claimed in any one of claims 33, 34 and 37, in which the catalyst deposit is in the form of a thin film.

39. The method as claimed in any one of claims 33, 34 and 37, in which the catalyst is deposited discontinuously.

40. The method as claimed in claim 39, in which the catalyst deposit is in the form of a set of discrete entities, for example drops, bumps, spots or dots of catalyst.

41. The method as claimed in claim 40, in which the deposit is ordered and said discrete entities are arranged in the form of a network or pattern, for example a network of interconnected lines or rows.

42. The method as claimed in claim 32, in which the substrate consists of a layer of nanotubes or a plurality of stacked layers of nanotubes.

43. A device for carrying out the method as claimed in any one of claims 1 to 42, comprising:
- a reaction chamber in which carbon nanotubes or nitrogen-doped carbon nanotubes are prepared by pyrolysis of a liquid containing at least one liquid hydrocarbon precursor of carbon or at least one liquid compound precursor of carbon and nitrogen consisting of carbon atoms, nitrogen atoms and optionally hydrogen atoms and/or atoms of other chemical elements such as oxygen, and optionally at least one metal compound precursor of a catalyst metal;
- means for forming said liquid under pressure into finely divided liquid particles such as droplets, for conveying said finely divided particles such as droplets by a carrier gas stream and introducing them into the reaction chamber;
- in which device said means for forming said liquid into finely divided liquid particles, for conveying them and introducing them into the reaction chamber comprise a periodic injection system, provided with an injection head, and a connection ring, in which the carrier gas intake is provided, connecting the injection system to the reaction chamber optionally via an evaporation device.

44. The device as claimed in claim 43, in which the side wall of the connection ring includes at least one carrier gas intake tube, said carrier gas intake tube opening into an annular groove surrounding the injection head of the system for injecting the liquid particles, and is placed behind it in order to surround the finely divided liquid particles without interfering with them.

## Patentansprüche

1. Verfahren zur Herstellung von Kohlenstoff-Nanoröhren oder stickstoffdotierten Kohlenstoff-Nanoröhren durch Pyrolyse einer Flüssigkeit in einer Reaktionskammer, die wenigstens einen flüssigen Kohlenstoffvorläufer-Kohlenwasserstoff oder wenigstens eine flüssige Kohlenstoff- und Stickstoffvorläuferverbindung, gebildet durch Kohlenstoff- und Stickstoffatome und eventuell Atome des Wasserstoffs und/oder anderer chemischer Elemente wie etwa Sauerstoff, und, eventuell, wenigstens eine Vorläufermetallverbindung eines Katalysatormetalls, bei dem die genannte Flüssigkeit unter Druck durch ein periodisches Einspritzungssystem in die Form von fein zerteilten Flüssigkeitspartikeln, wie Tröpfchen, gebracht wird und die so gebildeten fein zerteilten Partikel, wie Tröpfchen, durch eine Gasvektorströmung transportiert und in die Reaktionskammer eingeführt werden, wo die Abscheidung und das Wachstum der Kohlenstoff-Nanoröhren oder der stickstoffdotierten Kohlenstoff-Nanoröhren stattfindet.

2. Verfahren nach Anspruch 1, bei dem das genannte Einspritzsystem vom Typ Kraftfahrzeug-Verbrennungsmotor ist.

3. Verfahren nach Anspruch 2, bei dem das Einspritzsystem mit einem Ventil des Nadelventil-Typs ausgerüstet ist.

4. Verfahren nach Anspruch 1, bei dem die Nanoröhren räumlich gleichmäßig angeordnet, eingerichtet abgeschieden werden und generell zueinander ausgerichtet und im Wesentlichen senkrecht zu der Wand der Reaktionskammer sind.

5. Verfahren nach einem der Anspruch 1 bis 4, bei dem die Nanoröhren eine Länge von einigen Mikrometern, zum Beispiel von 1 bis 10 µm, bis einige Millimeter, zum Beispiel von 1 biss 10 mm, haben.

6. Verfahren nach Anspruch 1, bei dem der genannte flüssige Kohlenwasserstoff ausgewählt wird unter den nichtaromatischen Kohlenwasserstoffen.

7. Verfahren nach Anspruch 6, bei dem der genannte flüssige Kohlenwasserstoff ausgewählt wird unter den Alkanen mit 5 bis 20 C wie etwa das n-Pentan, das Isopentan, das Hexan, das Heptan und das Oktan; den flüssigen Alkenen mit 4 bis 20 C; den flüssigen Alkinen mit 4 bis 20 C; und den Cycloalkanen mit 5 bis 15 C wie die Cyclohexane.

8. Verfahren nach einem der Anspruch 1 bis 5, bei dem der genannte flüssige Kohlenwasserstoff ausgewählt wird unter den aromatischen Kohlenwasserstoffen mit 6 bis 12 C, eventuell substituiert, wie etwa das Benzol, das Toluol und das Xylol.

9. Verfahren nach einem der Anspruch 1 bis 5, bei dem die genannte flüssige Verbindung, gebildet durch Atome des Kohlenstoffs, Stickstoffs und eventuell Atome des Wasserstoffs und/oder anderer chemischer Elemente, wie Sauerstoff, ausgewählt wird unter den flüssigen Aminen, zum Beispiel Benzylamin, oder den Nitrilen, wie Acetonitril.

10. Verfahren nach einem der Anspruch 1 bis 9, bei dem sich die genannte Flüssigkeit in Form einer Lösung der Vorläufermetallverbindung(en) eines Katalysatormetalls präsentiert.

11. Verfahren nach Anspruch 10, bei dem die genannte Vorläufermetallverbindung eines Katalysatormetalls ausgewählt wird unter den durch Kohlenstoff, Wasserstoff, eventuell Stickstoff und/oder Sauerstoff und wenigstens einem Metall gebildeten Verbindungen.

12. Verfahren nach einem der Ansprüche 1 bis 11, bei dem die genannte Vorläufermetallverbindung eines Katalysatormetalls ausgewählt wird unter den Metallsalzen und den organometallischen Verbindungen, wie den Metallocenen.

13. Verfahren nach Anspruch 12, bei dem die genannten Metallsalze ausgewählt werden unter den Metallsalzen, deren Metall-Gegenion durch ein Heteroatom wie ein Halogenid gebildet wird.

14. Verfahren nach Anspruch 12, bei dem die genannten Metallsalze ausgewählt werden unter den Nitraten, den Acetaten, den Acetylacetonaten und den Phtalocyaninen von Metallen wie etwa das Eisenphtalocyanin und das Nickelphtalocyanin.

15. Verfahren nach einem der Ansprüche 11 bis 14, bei dem das genannte Metall ausgewählt wird unter Eisen, Kobalt, Nickel, Ruthenium, Palladium und Platin.

16. Verfahren nach einem der Ansprüche 12 und 15, bei dem die genannte organometallische Verbindung ausgewählt wird unter dem Ferrocen, dem Nickelocen, dem Kobaltocen und den Ruthenocen.

17. Verfahren nach einem der Ansprüche 11 bis 16, bei dem die Lösung außerdem eine (oder mehrere) Verbindung(en) umfasst, welche das Wachstum der Kohlenstoff-Nanoröhren oder der stickstoffdotierten Kohlenstoff-Nanoröhren begünstigen, wie Nitrate oder Alcoxide, Seltenerden, wie Yttrium, Lanthan und Cerium.

18. Verfahren nach einem der Ansprüche 11 bis 17, bei dem die Konzentration der Vorläufermetallverbindung eines Katalysatormetalls in der Lösung generell 0,2 bis 15 Masseprozent beträgt.

19. Verfahren nach einem der Ansprüche 11 bis 18, bei dem die Lösung eine Lösung mit 2,5 Masseprozent Ferrocen ist, vorzugsweise in Toluol und/oder Cyclohexan.

20. Verfahren nach einem der Ansprüche 1 bis 9, bei dem die genannte Flüssigkeit sich in Form einer kolloidalen Suspension von metallischen Nanopartikeln in dem genannten wenigstens einen flüssigen Kohlenwasserstoff oder in der genannten wenigstens einen flüssigen Verbindung, gebildet durch Atome des Kohlenstoffs, des Stickstoffs und eventuell Atome des Wasserstoffs und/oder anderer chemischer Elemente wie etwa Sauerstoff, präsentiert.

21. Verfahren nach Anspruch 20, bei dem die genannten metallischen Nanopartikel ausgewählt werden unter Nanopartikeln aus Eisen, Nickel, Kobalt, Ruthenium, Palladium, Platin und ihren Mischungen oder ihren Legierungen.

22. Verfahren nach einem der Ansprüche 20 und 21, bei dem eine (oder mehrere) Vorläufermetallverbindung(en) eines Katalysatormetalls, wie beschrieben in einem der Ansprüche 10 bis 16, in der genannten kolloidalen Suspension gelöst ist (sind).

23. Verfahren nach einem der Ansprüche 1 bis 22, bei dem die genannten fein zerteilten flüssigen Partikel wie Tröpfchen eine Abmessung, zum Beispiel einen Durchmesser, von einigen Zehntel Mikrometern bis mehrere zehn Mikrometer haben, vorzugsweise von 0,1 bis 20 Mikrometer.

24. Verfahren nach einem der Ansprüche 1 bis 23, bei dem das genannte periodische Einspritzsystem mit Impulsen arbeitet.

25. Verfahren nach Anspruch 24, bei dem die Impulszahl 0,96 bis 1200 pro Minute beträgt.

26. Verfahren nach einem der Ansprüche 24 und 25, bei dem das Volumen der bei jedem Impuls eingespitzten Flüssigkeit 2 bis 100 Mikroliter beträgt.

27. Verfahren nach einem der Ansprüche 1 bis 26, bei dem die durch das Einspritzsystem erzeugte fein verteilten flüssigen Partikel, wie Tröpfchen, vor ihrer Einleitung in die Reaktionskammer in einer Verdampfungseinrichtung verdampft werden.

28. Verfahren nach einem der Ansprüche 1 bis 27, bei dem die Pyrolyse bei einer Temperatur von 600 bis 1100 °C, besser 800 bis 1000 °C und noch besser 800 bis 900 °C durchgeführt wird.

29. Verfahren nach einem der Ansprüche 1 bis 28, bei dem die Pyrolyse während einer Dauer von 5 bis 60 Minuten, vorzugsweise 15 bis 30 Minuten, durchgeführt wird.

30. Verfahren nach einem der Ansprüche 1 bis 29, bei dem der Druck in der Reaktionskammer ein kontrollierter Druck ist, zum Beispiel niedriger als der atmosphärische Druck.

31. Verfahren nach einem der Ansprüche 1 bis 30, bei dem die Flüssigkeit eine Vorläufermetallverbindung eines Katalysatormetalls enthält und die Abscheidung und das Wachstum der Nanoröhren direkt auf den Wänden der Reaktionskammer erfolgen.

32. Verfahren nach einem der Ansprüche 1 bis 30, bei dem die Abscheidung und das Wachstum der Nanoröhren auf einem im Innern der Reaktionskammer platzierten Substrat stattfinden.

33. Verfahren nach Anspruch 32, bei dem die Flüssigkeit keine Vorläufermetallverbindung eines Katalysatormetalls enthält und das Substrat eine Katalysatorabscheidung aufweist.

34. Verfahren nach Anspruch 32, bei dem die Flüssigkeit eine (oder mehrere) Vorläufermetallverbindung(en) eines Katalysatormetalls enthält und das Substrat eine Katalysatorabscheidung aufweist oder nicht aufweist.

35. Verfahren nach Anspruch 32, bei dem das Substrat ausgewählt wird unter den Quarzsubstraten, den Siliciumsubstraten und den Substraten aus Metalloxiden wie Al₂O₃, Y₂O₃, MgO und ZrO₂.

36. Verfahren nach Anspruch 32, bei dem das Substrat ein Gewebe aus Kohlenstofffasern oder stickstoffdotierten Kohlenstofffasern ist.

37. Verfahren nach Anspruch 33 oder 34, bei dem die Katalysatorabscheidung ein oder mehrere Metalle umfasst, ausgewählt unter den Übergangsmetallen wie Fe, Ni und Co, und anderen Metallen wie Pd, Ru und Pt.

38. Verfahren nach einem der Ansprüche 33, 34 und 37, bei dem sich die Katalysatorabscheidung in Form einer dünnen Schicht präsentiert.

39. Verfahren nach einem der Ansprüche 33, 34 und 37, bei dem der Katalysator diskontinuierlich abgeschieden wird.

40. Verfahren nach Anspruch 39, bei dem sich die Katalysatorabscheidung in Form einer Gruppe von diskreten Einheiten präsentiert, zum Beispiel Katalysator-Tropfen, -Flächen (Stufen), -Flecken oder-Punkte.

41. Verfahren nach Anspruch 40, bei dem die Abscheidung angeordnet ist und die genannten diskreten Einheiten in Form eines Gitters oder Musters angeordnet sind, zum Beispiel eines Gitters aus vernetzten Linien oder Reihen.

42. Verfahren nach Anspruch 32, bei dem das Substrat durch eine Nanoröhrenschicht oder mehrere gestapelte Nanoröhrenschichten gebildet wird.

43. Vorrichtung zur Anwendung des Verfahrens nach einem der Ansprüche 1 bis 42, umfassend:
- eine Reaktionskammer, in der Kohlenstoff-Nanoröhren oder stickstoffdotierte Kohlenstoff-Nanoröhren durch Pyrolyse einer Flüssigkeit die wenigstens einen flüssigen Kohlenstoffvorläufer-Kohlenwasserstoff oder wenigstens eine flüssige Kohlenstoff- und Stickstoffvorläuferverbindung, gebildet durch Kohlenstoff- und Stickstoffatome und eventuell Atome des Wasserstoffs und/oder anderer chemischer Elemente wie Sauerstoff, und, eventuell, wenigstens eine Vorläufermetallverbindung eines Katalysatormetalls, hergestellt werden;
- Mittel um die genannte Flüssigkeit unter Druck in Form von fein zerteilten flüssigen Partikeln wie Tröpfchen zu bringen, um die genannten fein zerteilten Partikel, wie Tröpfchen, durch eine Gasvektorströmung zu transportieren und in die Reaktionskammer einzuführen;
- Vorrichtung, in der die genannten Mittel, die dazu dienen, aus der genannten Flüssigkeit fein zerteilte Partikel zu bilden, um diese zu transportieren und in die Reaktionskammer einzuführen, ein periodisches Einspritzsystem umfassen, ausgerüstet mit einem Einspritzkopf und einem Verbindungsring, in dem eine Vektorgas Zu führung vorgesehen ist und der das Einspritzsystem mit der Reaktionskammer verbindet, eventuell mittels einer Verdampfungseinrichtung.

44. Vorrichtung nach Anspruch 43, bei der die Seitenwand des Verbindungsrings wenigstens ein Eingangsrohr für das Vektorgas aufweist, wobei das Eingangsrohr des Vektorgases in eine den Einspritzkopf des Einspritzsystems der flüssigen Partikel umgebende Ringnut mündet und hinter diesem angeordnet ist, so dass es die fein zerteilten flüssigen Partikel umgibt ohne sie zu stören.
